# EUROPEAN PATENT APPLICATION

(11) **EP 4 604 536 A1**
(43) Date of publication of application: **20.08.2025**
(21) Application number: 23876974.9
(22) Date of filing: 02.08.2023
(51) Int. Cl.: H04N 19/563

(54) **IMAGE CODING DEVICE, IMAGE CODING METHOD AND PROGRAM, IMAGE DECODING DEVICE, AND IMAGE DECODING METHOD AND PROGRAM**

(30) Priority: 13.10.2022 JP 2022165024
(71) Applicant: CANON KABUSHIKI KAISHA, Tokyo 146-8501 (JP)
(72) Inventor: ISHIKAWA, Takaaki, Tokyo 146-8501 (JP)
(74) Representative: Canon Europe Limited
(86) International application number: PCT/JP2023/028243
(87) International publication number: WO 2024/079965

(57) **Abstract**

An image encoding apparatus comprises predicting means for generating a prediction image for a target block in a first frame to be encoded by referencing a second frame encoded before the first frame; encoding means for encoding a prediction error of the target block for the prediction image; interpolating means for, in a case where pixels outside of a boundary of the second frame are referenced, interpolating the pixels outside of the boundary of the second frame using pixels of a third frame encoded before the second frame; and transforming means for changing a resolution of a frame before the first frame.

## Description

### TECHNICAL FIELD

The present invention relates to image encoding and decoding technology.

### BACKGROUND ART

A known method for encoding a compressed recording of video is the Versatile Video Coding (VVC) encoding method (hereinafter referred to simply as VVC). To improve the encoding efficiency in VVC, a basic block referred to as a Coding Tree Unit (CTU) is divided into rectangular sub-blocks instead of the typical square shape.

Also, with VVC, in order to enable an efficient inter prediction for smooth scenes and the like, technology is applied to control the spatial resolution of a reference picture referred to as a scaling window. Furthermore, in video encoding such as that represented by VVC, since pixels outside of the screen boundary are referenced in an inter prediction, interpolation of the pixels outside of the screen boundary must be performed. PTL1 describes interpolation technology for pixels outside of a screen boundary in per-tile encoding processing.

Recently, the Joint Video Experts Team (JVET) who established the VVC standard have been proceeding with research into a novel encoding technology that can better VVC in both encoding efficiency and image quality enhancement. One such technology being looked into for introduction in order to improve encoding efficiency is a novel extrapolation method (hereinafter referred to as motion compensation pixel interpolation) for generating a pixel located outside of a screen boundary of a reference picture used in inter prediction using a pixel located inside a screen boundary of a reference picture different from the first reference picture.

### CITATION LIST

### PATENT LITERATURE

PTL1: Japanese Patent Laid-Open No. 2018-050085

### SUMMARY OF INVENTION

### TECHNICAL PROBLEM

In VVC, a technology called a scaling window is employed, and it allows a rectangular region to be set based on scale processing on each picture. In inter prediction, by comparing the size of the scaling windows set for each frame, inter prediction taking into account magnification or reduction of an object existing across frame can be performed.

Also, in VVC, since a prediction image is generated using inter prediction, information of pixels located outside the screen boundary of the reference picture may be used. Since the pixels outside the screen boundary are not targets for encoding, interpolation in which the pixels located inside the screen boundary of the reference picture are simply replicated may be used as the interpolation method common to both encoding and decoding. Regarding this, in JVET, research is being done into motion compensation pixel interpolation in which pixels outside the screen boundary of the reference frame are generated from the pixels inside the screen boundary of a reference frame different from the first reference frame using motion information included in blocks inside the screen boundary.

However, motion compensation pixel interpolation cannot be applied in cases such as when a scaling window is set to a reference picture and the reference picture is magnified or reduced and cases such as when the blocks inside the screen boundary of the reference picture do not include motion information. Thus, there is a problem in which prediction accuracy in inter prediction cannot be improved.

In light of such problems, the present invention enables realization of technology for encoding with interpolation accuracy for motion compensation pixels in inter prediction in conjunction with resolution transformation that is enhanced beyond that known and with higher efficiency.

### SOLUTION TO PROBLEM

To solve the problems described above, an image encoding apparatus according to the present invention has the following configuration, for example. Provided are:
predicting means for generating a prediction image for a target block in a first frame to be encoded by referencing a second frame encoded before the first frame;
encoding means for encoding a prediction error of the target block for the prediction image;
interpolating means for, in a case where pixels outside of a boundary of the second frame are referenced, interpolating the pixels outside of the boundary of the second frame using pixels of a third frame encoded before the second frame;
   and
transforming means for changing a resolution of a frame before the first frame.

Other features and advantages of the present invention will be apparent from the following description taken in conjunction with the accompanying drawings. Note that the same reference numerals denote the same or like components throughout the accompanying drawings.

### ADVANTAGEOUS EFFECTS OF INVENTION

According to the present invention, out-of-screen pixels of a reference frame used in inter prediction can be accurately generated and encoding efficiency can be enhanced.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a block configuration diagram of an image encoding apparatus according to an embodiment.
FIG. 2 is a block configuration diagram of an image decoding apparatus according to an embodiment.
FIG. 3 is a flowchart illustrating encoding processing according to an embodiment.
FIG. 4 is a flowchart illustrating image decoding processing according to an embodiment.
FIG. 5 is a diagram of the hardware configuration of a computer that can be applied to an image encoding apparatus and a decoding apparatus according to an embodiment.
FIG. 6A is a diagram illustrating an example of a bitstream structure.
FIG. 6B is a diagram illustrating another example of a bitstream structure.
FIG. 7A is a diagram illustrating an example of sub-block division in which one sub-block is the same size as a basic block used in the present embodiment.
FIG. 7B is a diagram illustrating an example of a division into four square sub-blocks used in the present embodiment.
FIG. 7C illustrates an example of a type of rectangular sub-block obtained by sub-block division.
FIG. 7D illustrates an example of a type of rectangular sub-block obtained by sub-block division.
FIG. 7E illustrates an example of a type of rectangular sub-block obtained by sub-block division.
FIG. 7F illustrates an example of a type of rectangular sub-block obtained by sub-block division.
FIG. 8 is a diagram illustrating an example of simple replication pixel interpolation.
FIG. 9 is a diagram illustrating an example of interpolation of out-of-screen pixels via motion compensation pixel interpolation.
FIG. 10A is a diagram illustrating an example of interpolation of out-of-screen pixels via motion compensation pixel interpolation in conjunction with resolution transformation of a reference picture.
FIG. 10B is a diagram illustrating an example of interpolation of out-of-screen pixels via motion compensation pixel interpolation in conjunction with resolution transformation of a reference picture.
FIG. 11 is a diagram illustrating an example of pixel generation of pixels outside the screen boundary not interpolated via motion compensation pixel interpolation.
FIG. 12 is a diagram illustrating an example out-of-screen pixel interpolation via motion compensation pixel interpolation using information of blocks adjacent to boundary blocks.
FIG. 13A is a diagram illustrating an example of high-speed processing of motion compensation pixel interpolation according to the present embodiment.
FIG. 13B is a diagram illustrating an example of high-speed processing of motion compensation pixel interpolation according to the present embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

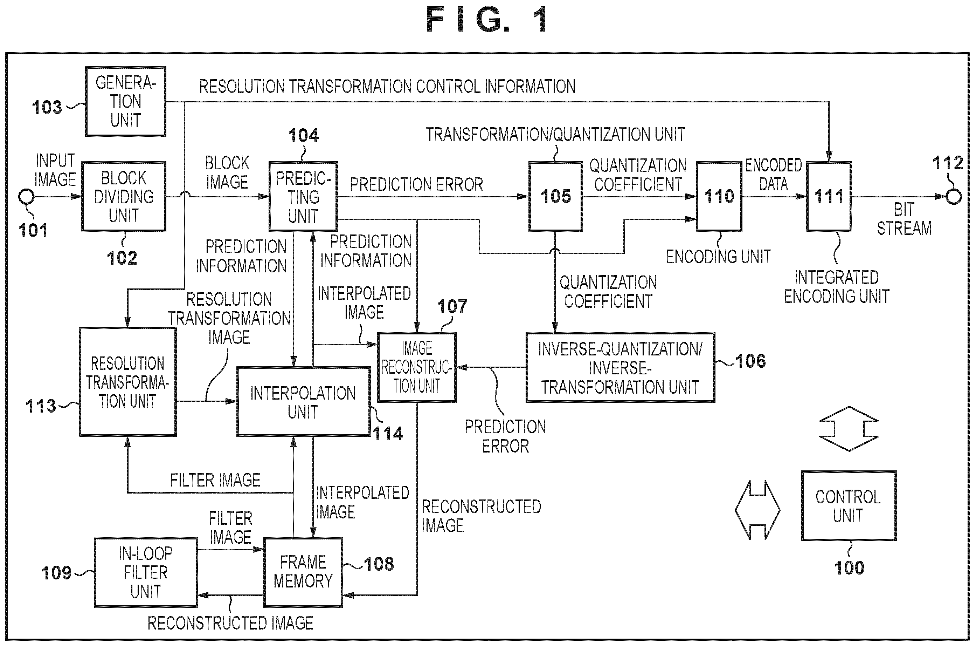

FIG. 1 is a block diagram illustrating an image encoding apparatus according to this embodiment. In the same diagram, a control unit 100 that controls the entire apparatus includes a CPU and a memory that stores a program for executing the CPU. A terminal 101 is an input terminal where image data is input. A generation source of video data to be encoded is connected to the terminal 101. The type of the generation source of video data is not particularly limited, and typically an imaging unit or a storage apparatus that stores video and image data to be encoded is used.

A block dividing unit 102 divides one frame of an image received via the terminal 101 into a plurality of basic blocks and outputs block images in units of basic blocks to the later stage.

A generation unit 103 generates offset information and the like used in resolution transformation of a reference picture and outputs this to a resolution transformation unit 113 and an integrated encoding unit 111. In the present embodiment, the offset information is information for setting a scaling window in each picture and information generated for calculating a magnification ratio or a reduction ratio of the picture (hereinafter referred to as resolution transformation control information). The method for generating the resolution transformation control information is not particularly limited. The user may input the resolution transformation control information, information derived from an operation such as a zoom in/zoom out operation detected in a video imaging device may be input as the resolution transformation control information, or resolution transformation control information designated in advance as an initial value may be used.

A predicting unit 104 generates sub-blocks by dividing a basic block. Also, the predicting unit 104 determines whether to perform intra prediction, which is intra-frame prediction per sub-block, or inter prediction, which is interframe prediction. The predicting unit 104 appropriately references an image (hereinafter referred to as an interpolated image) obtained via interpolation of pixels outside the screen boundary supplied from an interpolation unit 114 and generates prediction image data. Furthermore, the predicting unit 104 calculates a prediction error from the image data to be encoded and the generated prediction image data and outputs the prediction error to a transformation/quantization unit 105. Also, the predicting unit 104 outputs information required for prediction such as sub-block divisions, prediction mode, motion vectors, and similar information together with the prediction error. Hereinafter, information required for prediction is referred to as prediction information. Also, the predicting unit 104 outputs the prediction information to the interpolation unit 114.

The transformation/quantization unit 105 performs orthogonal-transforming of prediction error data per sub-block, performs quantization on the obtained transform coefficient using a set quantization parameter, and obtains a residual coefficient. Note that the quantization parameter is a parameter used in quantization of the transform coefficient obtained via orthogonal-transforming.

An inverse-quantization/inverse-transformation unit 106 inverse-quantizes the residual coefficient output from the transformation/quantization unit 105, reconstructs the transform coefficient, performs inverse-orthogonal-transforming, and reconstructs prediction error data.

A frame memory 108 is memory that stores the reconstructed image data.

A resolution transformation unit 113 magnifies or reduces the image stored in the frame memory 108 on the basis of the resolution transformation control information and outputs the magnified or reduced image as a resolution transformation image.

The interpolation unit 114 appropriately references the resolution transformation image output by the resolution transformation unit 113, the prediction information output by the predicting unit 104, and a filter image stored in the frame memory 108 and generates interpolation image data. Then, the interpolation unit 114 outputs the generated interpolation image data to the predicting unit 104 and an image reconstruction unit 107. Note that the interpolation unit 114 may store image data including generated out-of-screen pixel information in the frame memory 108 as an interpolation image. Also, the interpolation unit 114 may retrieve the generated interpolation image from the frame memory 108 and may output it to the predicting unit 104 and the image reconstruction unit 107.

The image reconstruction unit 107 generates reconstructed image data from the interpolation image data output by the interpolation unit 114 and the prediction error data on the basis of the prediction information output from the predicting unit 104.

An in-loop filter unit 109 executes in-loop filter processing, such as deblocking filtering and sample adaptive offset, on the reconstructed image.

An encoding unit 110 encodes the residual coefficient output from the transformation/quantization unit 105 and the prediction information output from the predicting unit 104 and generates encoded data.

The integrated encoding unit 111 encodes resolution transformation control information, the output of the generation unit 103, and generates header encoded data. Also, the integrated encoding unit 111 forms a bitstream together with the encoded data output from the encoding unit 110.

A terminal 112 is an output terminal that outputs the bitstream generated by the integrated encoding unit 111 to an external unit. The types of output destinations include a network and a storage apparatus (including a storage medium), for example.

The configuration and basic operation of the image encoding apparatus according to the embodiment have been described above. Next, image encoding operations by the image encoding apparatus will be described below. In the present embodiment, video data is input one frame at a time, but in another possible configuration, one frame of still image data is input.

Before image encoding, the generation unit 103 generates the resolution transformation control information. The resolution transformation control information according to the present embodiment includes the horizontal size and vertical size of the current picture, offset information representing the scaling window of the current picture, and a resolution transformation magnification in the horizontal direction and vertical direction. The horizontal size and vertical size of the current picture is the number of pixels in the horizontal direction and the number of pixels in the vertical direction of the image input from the terminal 101. The offset information representing the scaling window is information that defines the position and size of the scaling window with respect to the current picture. In the present embodiment, in the offset information, the position and size of the scaling window is defined using the distances of the scaling window from the left side, right side, upper side, and lower side to each side. The offset with respect to each side is represented by a number of pixels. Also, the same offset is represented by a positive value if it is offset in the direction from the picture screen boundary toward the center and a negative value if it is offset in the direction from the screen boundary to the outside. In the following description, the offsets with respect to each side are referred to as the left side offset, the right side offset, the upper side offset, and the lower side offset. Also, the offset of the current picture is referred to as offset C, and the offset of the reference picture is referred to as offset R to distinguish between the two.

Next, the generation unit 103 uses the offsets with respect to each side described above to calculate for both the horizontal direction and the vertical direction the magnification ratio representing the magnification ratio or the reduction ratio of the reference picture with respect to the current picture.

For example, the resolution transformation magnification in the horizontal direction is calculated using the following formula.
Resolution transformation magnification in horizontal direction = (horizontal size of reference picture - left side offset R - right side offset R)/(horizontal size of current picture - left side offset C - left side offset C)
Also, the resolution transformation magnification in the vertical direction is calculated using the following formula.
Resolution transformation magnification in vertical direction = (vertical size of reference picture - upper side offset R - lower side offset R)/(vertical size of current picture - upper side offset C - lower side offset C)
Using these calculation formulas, the resolution transformation magnification with respect to the current picture is calculated for all of the reference pictures that can be referenced in the encoding of the current picture. The generation unit 103 stores the resolution transformation magnification calculated in this manner in the resolution transformation control information and outputs this to a resolution transformation unit 113 and the integrated encoding unit 111.

One frame of image data input from the terminal 101 is supplied to the block dividing unit 102.

At the block dividing unit 102, the input image data is divided into a plurality of basic blocks, and images in units of basic blocks are output to the predicting unit 104.

The predicting unit 104 executes prediction processing on the image data (basic block images) input from the block dividing unit 102. Specifically, the predicting unit 104 first executes processing (sub-block dividing processing) to divide the input basic block sized images into further smaller sub-blocks.

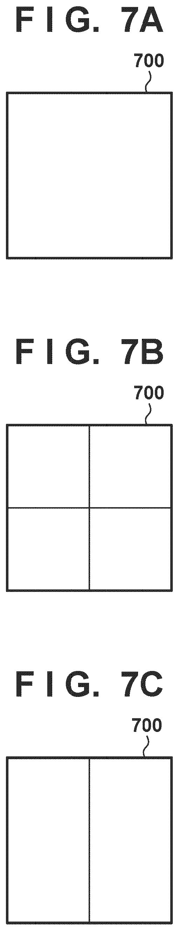

FIGS. 7A to 7F illustrate examples of a basic block being divided into sub-blocks. Reference sign 700 denotes a basic block with a bold frame, and to simplify the description, in this example, the size of the basic block is 32 × 32 pixels. The quadrangles inside the bold frame represent the sub-blocks. FIG. 7A illustrates an example in which one sub-block has the same size as the basic block.

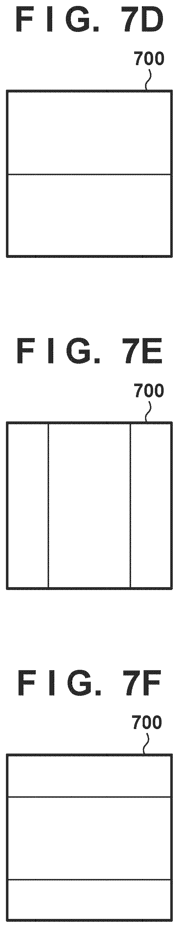

FIG. 7B illustrates an example of a division into four square sub-blocks. Since the size of the basic block is 32 × 32 pixels, the size of each of the four sub-blocks in FIG. 7B is 16 × 16 pixels. Also, FIGS. 7C to 7F illustrates examples of different types of rectangular sub-blocks obtained via sub-division. FIG. 7C illustrates an example in which the basic block is divided into two vertically-long rectangular sub-blocks with a size of 16 × 32 pixels. FIG. 7D illustrates an example of a division into two horizontally-long rectangular sub-blocks with a size of 32 × 16 pixels. Also, FIGS. 7E and 7F illustrate an example of division into rectangles at a ratio of 1:2:1. In this manner, in the present embodiment, encoding processing is executed using rectangular sub-blocks and not only square sub-blocks.

The predicting unit 104 determines the prediction mode for each sub-block to be processed. Specifically, the predicting unit 104 determines the prediction mode by determining whether to use intra prediction using encoded pixels of the current picture including sub-blocks to be processed or inter prediction using pixels of an encoded picture different from the current picture. Also, the predicting unit 104 generates prediction image data on the basis of the determined prediction mode and the encoded pixels. Furthermore, the predicting unit 104 generates prediction error data from the input image data and the generated prediction image data and outputs the generated prediction error data to the transformation/quantization unit 105. Note that the interpolation unit 114 may generate pixels outside the screen boundary of the reference picture via pixel interpolation or may generate pixels outside the screen boundary of the reference picture via resolution transformation of encoded pixels. Such a method for generating pixels outside the screen boundary via motion compensation pixel interpolation in inter prediction in conjunction with resolution transformation will be described below. Also, the predicting unit 104 outputs information such as sub-block divisions, the prediction mode, and the like to the encoding unit 110 and the image reconstruction unit 107 as the prediction information.

The transformation/quantization unit 105 performs frequency conversion on the prediction error data of the sub-block that predicting unit 104 executed prediction processing for and further performs quantization. The method for determining the value of the quantization parameter used in quantization is not particularly limited, and the user may input a quantization parameter, or a value may be calculated from the characteristics of the input image or designated in advance as an initial value.

The inverse-quantization/inverse-transformation unit 106 performs inverse-quantizing of the input residual coefficient to reconstruct the transform coefficient and further performs inverse-orthogonal-transforming of the reconstructed transform coefficient to reconstruct the prediction error data. Then, the inverse-quantization/inverse-transformation unit 106 outputs the reconstructed prediction error data to the image reconstruction unit 107. Note that the quantization parameter used when the inverse-quantization/inverse-transformation unit 106 executes inverse-quantizing of the sub-block is the same quantization parameter used when the transformation/quantization unit 105 quantizes the sub-block.

The image reconstruction unit 107, on the basis of the prediction information input from the predicting unit 104, appropriately references the interpolation image supplied from the interpolation unit 114 and generates a prediction image. Then, the image reconstruction unit 107 reconstructs the image data from the generated prediction image and the prediction error data generated by the inverse-quantization/inverse-transformation unit 106 and stores the reconstructed image data in the frame memory 108.

The in-loop filter unit 109 reads out the reconstructed image from the frame memory 108 and executes in-loop filter processing such as deblocking filtering. The in-loop filter processing is executed on the basis of the prediction mode of the predicting unit 104 and the value of the quantization parameter used by the transformation/quantization unit 105 and also on the basis of whether or not there is a non-zero value in the post-quantization processed sub-block or the sub-block division information. The in-loop filter unit 109 re-stores the image data obtained via filter processing in the frame memory 108 again.

The resolution transformation unit 113 magnifies or reduces the image stored in the frame memory 108 on the basis of the resolution transformation control information. Also, the resolution transformation unit 113 outputs the magnified or reduced image as the resolution transformation image.

Here, magnifying or reducing processing will be described using an example in a case where a scaling window is set for the reference picture and a scaling window is not set for the current picture. **In** this example, the horizontal size of the current picture and the reference picture is set to 1920 pixels, and the vertical size is set to 1080 pixels. Also, the left side offset and the right side offset set for the reference picture are both 240 pixels, and the upper side offset and the lower side offset are both 135 pixels. Furthermore, the current picture is not set with an offset. **In** this case, the resolution transformation magnification in the horizontal direction and vertical direction are calculated as follows using the resolution transformation magnification calculation formula described above. · Resolution transformation magnification in horizontal direction = (1920 - 240 - 240)/1920 = 0.75 · Resolution transformation magnification in vertical direction = (1080 - 135 - 135)/1080 = 0.75 The resolution transformation magnification represents how big the size of the rectangular region of the reference picture where the offset is applied is with respect to the rectangular region of the current picture where the offset is applied. In the example described above, the reference picture is, with respect to the current picture, reduced by 0.75, that is 3/4. Thus, in this case, the resolution transformation unit 113 generates a resolution transformation image by magnifying the reference picture with a multiplying factor of 4/3, which is the multiplicative inverse of the resolution transformation magnification. Then, the resolution transformation unit 113 outputs the generated resolution transformation image to the interpolation unit 114. The interpolation filter or decimation filter (hereinafter referred to as a resolution transformation filter) used in the resolution transformation is not particularly limited, and the user may input one or more resolution transformation filters or may use a value designated in advance as the initial value. Also, the resolution transformation unit 113 may switch between a plurality of resolution transformation filters depending on the resolution transformation magnification and generate a resolution transformation image. In this manner, by magnifying or reducing the reference picture on the basis of the resolution transformation magnification, the inter prediction can follow the magnification or reduction of an object in a video in a zoom-in or zoom-out scene.

In the example described above, an offset is not set for the current picture, but the present embodiment is not limited thereto, and a scaling window may not be set for the current picture. In this example, the horizontal size of the current picture and the reference picture is set to 1920 pixels, and the vertical size is set to 1080 pixels. Also, the left side offset and the right side offset set for the reference picture are both 510 pixels, and the upper side offset and the lower side offset are both 270 pixels. Also, the left side offset and the right side offset set for the current picture are both 360 pixels, and the upper side offset and the lower side offset are both 180 pixels. In such a case, the resolution transformation magnification in the horizontal direction and the vertical direction are calculated as follows. · Resolution transformation magnification in horizontal direction = (1920 - 510 - 510)/(1920 - 360 - 360) = 0.75 · Resolution transformation magnification in vertical direction = (1080 - 270 - 270)/(1080 - 180 - 180) = 0.75 In this manner, the same resolution transformation magnification can be designated as when the current picture is not set with an offset as described above.

Also, the horizontal size and the vertical size of the current picture and the reference picture may be different in terms of the number of pixels. For example, the horizontal size of the current picture may be 1920 pixels and the vertical size may be 1080 pixels, the horizontal size of the reference picture may be 960 pixels and the vertical size may be 540 pixels, and a scaling window may not be set for the current picture and the reference picture. In this case, the resolution transformation magnification in the horizontal direction and the vertical direction are calculated as follows. Resolution transformation magnification in horizontal direction = (960 - 0 - 0)/(1920 - 0 - 0) = 0.5 Resolution transformation magnification in vertical direction = (540 - 0 - 0)/(1080 - 0 - 0) = 0.5 In this manner, even in the case of an image with different number of pixels between the current picture and the reference picture, resolution transformation magnification can be designated. As a result, even if the video is made of magnified or reduced images in one section more than another section, the interpolation unit 114 can generate pixels outside the screen boundary of the reference picture using motion compensation pixel interpolation.

The interpolation unit 114 appropriately references the resolution transformation image output by the resolution transformation unit 113, the prediction information output by the predicting unit 104, and a filter image stored in the frame memory 108 and generates image data obtained via interpolation of pixels outside the screen boundary of the current picture. In order to interpolate the pixels outside the screen boundary of the current picture, the interpolation unit 114 uses the prediction information output by the predicting unit 104 to identify the position of the pixels required for interpolation of the out-of-screen pixels and generate the out-of-screen pixels. Then, the interpolation unit 114 outputs the generated image data to the predicting unit 104 and the image reconstruction unit 107. The out-of-screen pixel information may be generated each time the filter image is referenced, or the once-calculated out-of-screen pixel information may be stored in the frame memory 108 as an interpolation image associated with the filter image.

To generate image data, the interpolation unit 114 first retrieves the filter image of the current picture targeted for interpolation of the out-of-screen pixels from the frame memory 108 and holds them together with the prediction information used in the encoding of the current picture input from the predicting unit 104. Next, the interpolation unit 114 reads out, from the prediction information, the prediction mode for all of the sub-blocks in contact with the inner side of the screen boundary of the filter image of the current picture. Also, the interpolation unit 114 determines the interpolation method for pixels outside the screen boundary of the filter image of the current picture according to the state of the prediction mode of each block (hereinafter referred to as boundary block) in contact, from the inner side, with the screen boundary of the read out current picture. In the present embodiment, the method used for pixel interpolation of out-of-screen pixels may be interpolation (hereinafter referred to as simple replication pixel interpolation) in which pixels of inside the screen boundary of the reference picture are simply replicated and generated outside the screen boundary of the same reference picture or may be motion compensation pixel interpolation in which pixels of inside the screen boundary of the reference picture are generated using pixels of inside the screen boundary of a reference picture different from the first reference picture. The simple replication pixel interpolation and motion compensation pixel interpolation will be described below in detail.

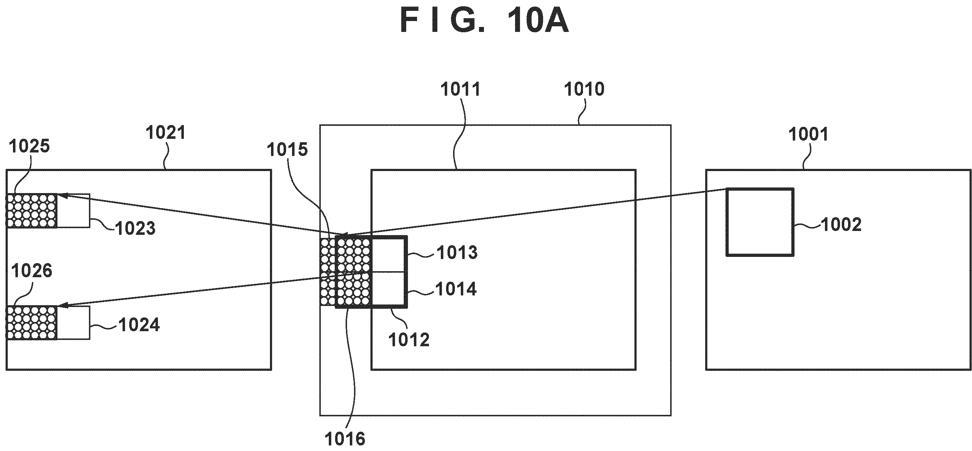

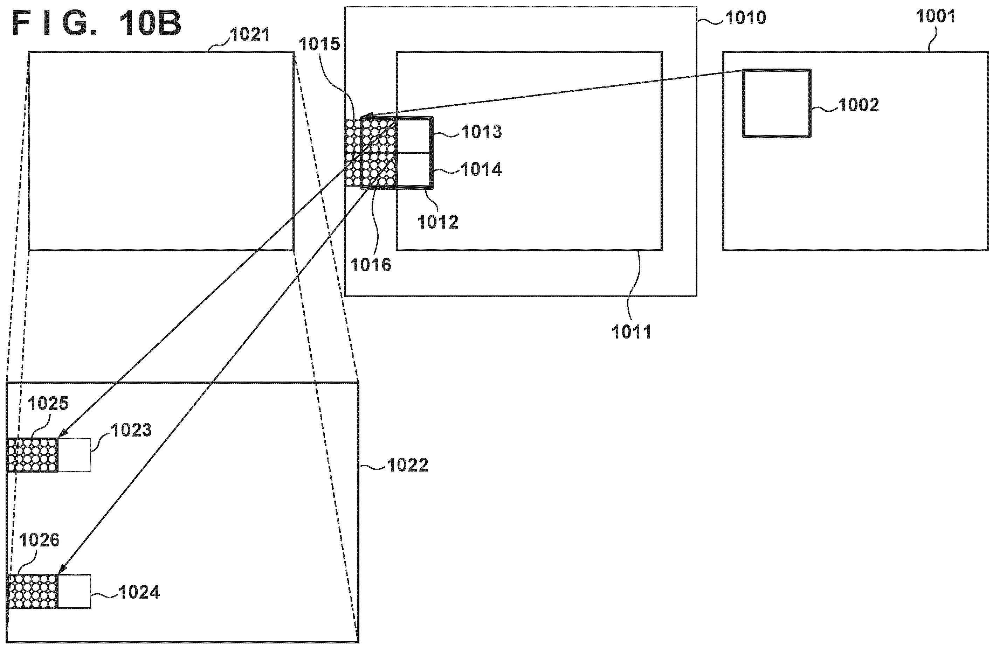

Here, a method for generating pixels outside the screen boundary using motion compensation pixel interpolation in inter prediction in conjunction with resolution transformation of the reference picture will be described with reference to FIGS. 10A and 10B.

FIGS. 10A and 10B illustrate cases where the predicting unit 104 encodes a sub-block 1002 via inter prediction. A current picture 1001 indicated with a thick frame in the right diagram is the encoding target, and the rectangular region indicated with a thick frame in the central diagram is a reference picture 1011. A thin frame 1010 is a region including pixels outside the screen boundary of the reference picture 1011, and the pixels outside the screen boundary are generated via simple replication pixel interpolation or motion compensation pixel interpolation. A prediction image 1012 indicated with the rectangular region in the reference picture 1011 is generated by inter prediction by the predicting unit 104 and represents a prediction block of the sub-block 1002. The left side of a boundary block 1013 and the left side of a boundary block 1014 are in contact on the inner side with the left side of the reference picture 1011, and the prediction mode of the boundary block 1013 and the boundary block 1014 is inter prediction. Also, a rectangular region 1015 and a rectangular region 1016 are filled with pixels generated by simple replication pixel interpolation or motion compensation pixel interpolation. Note that even in a case where the upper side of the boundary block is in contact from the inner side with the upper side of the reference picture, where the right side of the boundary block is in contact from the inner side with the right side of the reference picture, and where the lower side of the boundary block is in contact from the inner side with the lower side of the reference picture, the interpolation unit 114 generates pixels outside the screen boundary of the reference picture 1011 using simple replication pixel interpolation or motion compensation pixel interpolation as in a case where the left side of the boundary block is in contact from the inner side with the left side of the reference picture. Also, in the case of using motion compensation pixel interpolation, the interpolation unit 114 generates pixels outside the screen boundary of the reference picture not generated using motion compensation pixel interpolation via simple replication pixel interpolation using the pixels of the screen boundary of the reference picture. Then, in the motion compensation pixel interpolation of each boundary block, on the basis of the motion information of each boundary block, for each of all the boundary blocks in contact with the inner side inside the boundary block of the reference picture, pixels located outside the screen boundary of the reference picture are generated using motion compensation pixel interpolation. Also, in the processing of each boundary block, pixels located outside the screen boundary of the reference picture are generated without referencing the motion information of other boundary blocks.

In the example illustrated in FIG. 10A, an image for interpolation 1021 is a filter image used in inter prediction of the boundary block of the reference picture 1011 and is a picture retrieved from the frame memory 108. Also, the values of the pixels inside the screen boundary of the picture correspond to a picture used to generate pixels outside the screen boundary of the reference picture via motion compensation pixel interpolation. The image for interpolation 1021 and the reference picture 1011 are not set with a scaling window and all offsets are 0. Thus, the resolution transformation magnification is 1 in the horizontal and vertical direction, and there is no need to perform resolution transformation of the image for interpolation 1021 in inter prediction of the boundary block 1013. As a result, a prediction block 1023 corresponding to the boundary block 1013 located inside the prediction image 1012 is located inside the screen boundary of the image for interpolation 1021. In a similar manner, a prediction block 1024 corresponding to the boundary block 1014 located inside the prediction image 1012 is located inside the screen boundary of the image for interpolation 1021. Accordingly, the interpolation unit 114 uses the pixel group of a rectangular region 1025 of the image for interpolation 1021 to generate pixels of the rectangular region 1015 located outside the screen boundary of the reference picture. In a similar manner, the interpolation unit 114 uses the pixel group of a rectangular region 1026 of the image for interpolation 1021 to generate pixels of the rectangular region 1016 located outside the screen boundary of the reference picture. Accordingly, the interpolation unit 114 generates pixels outside the screen boundary of the reference picture constituting the prediction image 1012 of the reference picture 1011 referenced by inter prediction of the sub-block 1002 via motion compensation pixel interpolation using the pixels inside the screen boundary of the image for interpolation 1021. Also, for all of the boundary blocks of the reference picture 1011, the interpolation unit 114 stores the reference picture obtained by completing interpolation of the outside the screen boundary of the reference picture generated by executing motion compensation pixel interpolation in the frame memory 108.

In the example illustrated in FIG. 10B, the offsets of the scaling window set in the image for interpolation 1021 and the reference picture 1011 are not 0. In other words, in inter prediction of the boundary block 1013, resolution transformation needs to be performed on the image for interpolation 1021. Thus, the prediction block 1023 corresponding to the boundary block 1013 located inside the prediction image 1012 is located inside the screen boundary of the resolution transformation image (hereinafter referred to as the resolution-transformed image for interpolation) obtained via resolution transformation on the basis of offset information of the image for interpolation 1021 and the reference picture 1011, instead of the image for interpolation 1021. In a similar manner, the prediction block 1024 corresponding to the boundary block 1014 located inside the prediction image 1012 is located inside the screen boundary of a resolution-transformed image for interpolation 1022, instead of the image for interpolation 1021.

The processing for generating the resolution-transformed image for interpolation 1022 from the image for interpolation 1021 will now be described. To simplify the description, in this example, the image for interpolation 1021 is set with a scaling window, and the current picture 1001 and the reference picture 1011 are not set with a scaling window. However, the present embodiment is not limited to this. The current picture 1001 and the reference picture 1011 may be set with a scaling window. In the example illustrated in FIG. 10B, the horizontal size of the reference picture 1011 and the image for interpolation 1021 is 1920 pixels and the vertical size is 1080 pixels, and the left side offset and the right side offset set for the image for interpolation 1021 are both 240 pixels, and the upper side offset and the lower side offset are both 135 pixels. Also, the offsets of the four sides of the reference picture are 0 pixels. In this case, the resolution transformation magnification is calculated to be 0.75 in the horizontal direction and the vertical direction using the calculation formula described above. Thus, the resolution-transformed image for interpolation 1022 is an image of the image for interpolation 1021 magnified by 4/3 times, which is the multiplicative inverse of 0.75. In this manner, the resolution-transformed image for interpolation 1022 is generated from the image for interpolation 1021 on the basis of the offset information set for the reference picture 1011 and the image for interpolation 1021.

In FIG. 10B, the prediction image 1012 of the reference picture 1011 represents the prediction block of the sub-block 1002 generated by the predicting unit 104 via inter prediction. Also, the prediction mode of the boundary blocks 1013 and 1014 of the reference picture 1011 included in the prediction image 1012 is inter prediction, and a motion vector is generated for the prediction blocks 1023 and 1024 inside the screen boundary of the resolution-transformed image for interpolation 1022. Also, the left side of the boundary block 1013 and the boundary block 1014 are in contact from the inner side with the left side of the reference picture 1011. At this time, since an offset is set for either the image for interpolation 1021 normally referenced by the boundary block of the reference picture 1011 or the reference picture 1011, the prediction image used in inter prediction of the boundary blocks 1013 and 1014 corresponds to the resolution-transformed image for interpolation 1022 obtained via resolution transformation of the image for interpolation 1021 as described above, instead of the image for interpolation 1021. Thus, the prediction block 1023 corresponding to the boundary block 1013 is located inside the screen boundary of the resolution-transformed image for interpolation 1022. In a similar manner, the prediction block 1024 corresponding to the boundary block 1014 is also located inside the screen boundary of the resolution-transformed image for interpolation 1022. Furthermore, one or more of the pixel groups of the prediction image 1012 correspond to pixels of the rectangular region 1015 and the rectangular region 1016 formed by pixels outside the screen boundary of the reference picture 1011. The pixels of the rectangular region 1015 and the rectangular region 1016 are generated using simple replication pixel interpolation or motion compensation pixel interpolation as described above. Specifically, the pixel group of the rectangular region 1015 located to the left of the boundary block 1013 is generated using the rectangular region 1025 located inside the screen boundary of the resolution-transformed image for interpolation 1022 referenced by the boundary block 1013. In a similar manner, the pixel group of the rectangular region 1016 located to the left of the boundary block 1014 is generated using the rectangular region 1026 located inside the screen boundary of the resolution-transformed image for interpolation 1022 referenced by the boundary block 1014. In this case, the interpolation unit 114 generates pixels outside the screen boundary of the reference picture constituting the prediction image 1012 of the reference picture 1011 referenced by inter prediction of the sub-block 1002 via motion compensation pixel interpolation using the pixels inside the screen boundary of the resolution-transformed image for interpolation 1022. Also, for all of the boundary blocks of the reference picture 1011, the interpolation unit 114 stores the reference picture obtained by completing interpolation of the outside the screen boundary of the reference picture generated by executing motion compensation pixel interpolation in the frame memory 108.

Returning to FIG. 1, in units of blocks, the encoding unit 110 entropy encodes the residual coefficient generated by the transformation/quantization unit 105 and the prediction information input from the predicting unit 104 and generates encoded data.

The entropy encoding method is not particularly limited, but typical examples include Golomb coding, arithmetic coding, Huffman coding, and the like. The generated encoded data is output to the integrated encoding unit 111. In encoding the quantization parameter constituting the quantization information, an identifier indicating a difference value between the quantization parameter of a sub-block to be encoded and a predicted value calculated using the quantization parameter of a sub-block encoded before the first sub-block. In the present embodiment, the quantization parameter encoded immediately before the sub-block in the encoding order is set as the predicted value, and the difference value with the quantization parameter of the sub-block is calculated. However, the predicted value of the quantization parameter is not limited to this. The quantization parameter of the sub-block adjacent to the sub-block on the left or above may be the predicted value, or a value such as an average value calculated from the quantization parameters of a plurality of sub-blocks may be used as the predicted value. Furthermore, in a case where the sub-block to be processed is, from among the sub-blocks belonging to a first basic block in a basic block row, the first sub-block in the encoding order, the quantization parameter of the sub-block in the basic block directly above may be used as the predicted value. Accordingly, parallel processing in units of basic block rows can be executed. Note that a first basic block in a basic block row refers to a basic block where a picture boundary or tile boundary exists on the left side.

The integrated encoding unit 111 encodes the resolution transformation control information. In the present embodiment, the resolution transformation control information includes the horizontal number of pixels and vertical number of pixels of the current picture and offset information including the left side offset, the right side offset, the upper side offset, and the lower side offset. Each offset is a number of pixels and includes a sign indicating plus or minus. Also, the integrated encoding unit 111 also encodes a flag indicating execution of motion compensation pixel interpolation. Specifically, in the case of executing motion compensation pixel interpolation, the flag of 1 is encoded, and in the case of not executing motion compensation pixel interpolation, the flag of 0 is encoded.

The method of encoding the resolution transformation control information and a flag indicating execution of motion compensation pixel interpolation is not particularly limited. However, Golomb coding, arithmetic coding, Huffman coding, and the like may be used. Also, the integrated encoding unit 111 forms a bitstream by multiplexing the encoded data and the like input from the encoding and encoding unit 110. Ultimately, the bitstream is output to an external unit from the terminal 112.

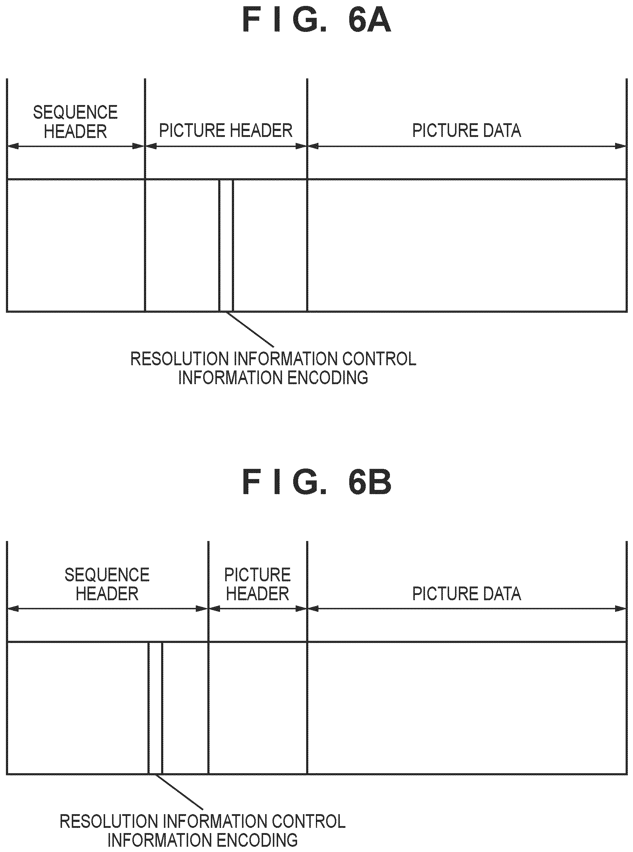

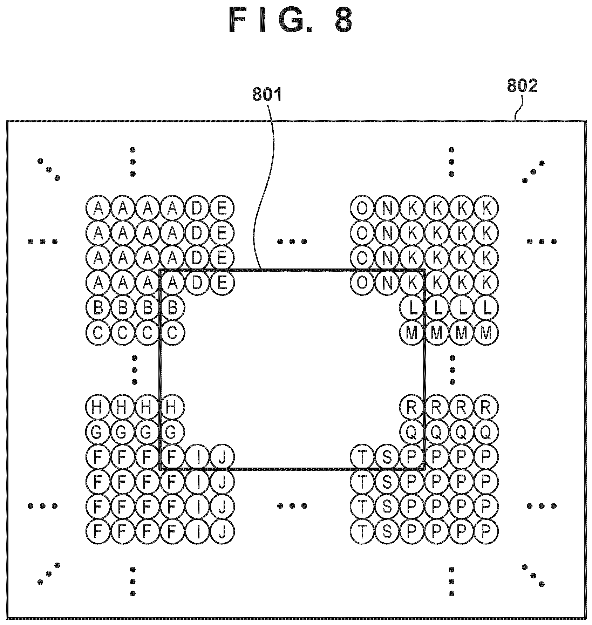

FIG. 6A illustrates an example of the data structure of a bitstream including the encoded resolution transformation control information. The resolution transformation control information is included in any of a sequence, picture, or similar header. In the present embodiment, the resolution transformation control information is included in a picture header portion as illustrated in FIG. 6A. However, the position where the resolution transformation control information is stored in not limited to this, and the resolution transformation control information may be included in a sequence header portion as illustrated in FIG. 6B. Here, the simple replication pixel interpolation will be described with reference to FIG. 8. FIG. 8 illustrates an example of simple replication pixel interpolation in which pixels inside the screen boundary of the reference picture are simply replicated and generated outside the screen boundary of the same reference picture. A thick frame 801 represents the screen boundary of the reference picture, and a thin frame 802 represents the region outside the screen boundary of the reference picture. The circles marked with a letter of the alphabet represent pixels A to pixels T inside the screen boundary and outside the screen boundary. Also, the three consecutive black circles represent an abbreviation of the pixels outside the screen boundary. In simple replication pixel interpolation, the pixels in contact with the screen boundary of the reference picture and inside the screen boundary of the reference picture are simply replicated in the normal direction of the picture boundary to generate pixels outside the screen boundary of the reference picture. For example, at the screen boundary on the left side of the reference picture, the pixel inside the screen boundary located third from the top is the pixel C. In this case, the pixel C is generated outside the screen boundary of the reference picture by replicating the pixel C with the same value consecutively in the left direction outside the screen boundary of the reference picture, that is, the normal line on the left side of the reference picture. In a similar manner, at the screen boundary on the right side of the reference picture, the pixels inside the screen boundary are replicated in the right direction, at the screen boundary on the upper side of the reference picture, the pixels inside the screen boundary are replicated in the up direction, and at the screen boundary on the lower side of the reference picture, the pixels inside the screen boundary are replicated in the down direction to generate pixels outside the screen boundary of the reference picture. Note that the pixels in the upper-left, upper-right, lower-left, and lower-right regions of the reference picture which are pixels not located on a normal line of the left side, right side, upper side, and lower side are generated using the pixels located in the four corners inside the screen boundary of the reference picture. Specifically, the pixels of the upper-left region are generated by simply replicating the pixel A at the upper-left inside the screen boundary. In a similar manner, the pixels of the upper-right region are generated by simply replicating the pixel K at the upper-right inside the screen boundary, the pixels of the lower-left region are generated by simply replicating the pixel F at the lower-left inside the screen boundary, and the pixels of the lower-right region are generated by simply replicating the pixel P at the lower-right inside the screen boundary. By using simple replication pixel interpolation in this manner, pixel values outside the screen boundary of each reference picture can be quickly generated.

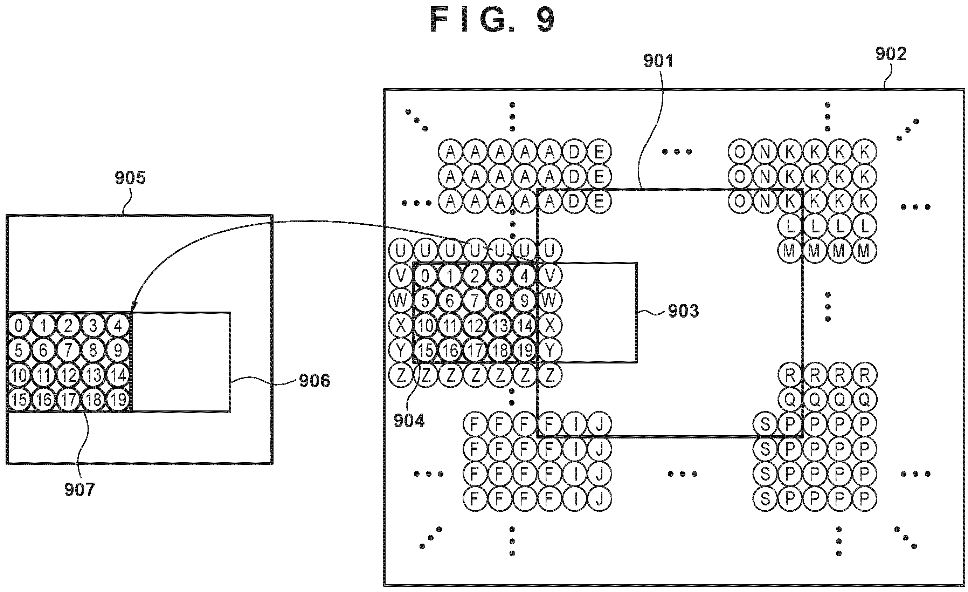

Next, motion compensation pixel interpolation will be described in detail using FIG. 9. FIG. 9 illustrates an example of interpolation to generate pixels outside the screen boundary of a filter image of a current picture using the pixels inside the screen boundary of a filter image retrieved from the frame memory 108. The retrieved filter image is a filter image obtained via in-loop filter processing referenced for inter prediction by each sub-block to be encoded of the current picture or an interpolation image obtained via generation of pixels outside the screen boundary by the interpolation unit 114. A thick frame 901 represents the screen boundary of the filter image (hereinafter referred to as the current filter image), and a region 902 indicated by a thin frame represents the region outside the screen boundary of the current filter image. Also, a boundary block 903 is a region in contact from the inside with the left side of the screen boundary of the current filter image. To simplify matters, FIG. 9 illustrates an example of a 4×4-pixel square block. However, the present embodiment is not limited to this. For example, an 8×8-pixel square block may be used, or an 8×16-pixel rectangular block may be used. Hereinafter, the size of the square block will be represented by N×N-pixels. In a case where the left side of the boundary block is in contact from the inner side with the left side of the current filter image as illustrated in FIG. 9, a rectangular region 904 adjacent to the outer side of the boundary block of the current filter image is in contact from the outer side with the left side of the current filter image. In this case, the right side of the rectangular region 904 is the same line segment as the left side of the boundary block.

The thick line indicating the periphery of the left diagram of FIG. 9 represents the screen boundary of a reference filter image 905 referenced via inter prediction by the boundary block of the current filter image different from the current filter image described above retrieved from the frame memory 108, and the square block 906 is a region located inside the reference filter image. The interpolation unit 114 identifies the position of the square block 906, which is the reference target of the boundary block 903 on the basis of the prediction information of the boundary block 903. The square block 906 is a block used in calculating the prediction error of the boundary block 903. Thus, the boundary block 903 and the square block 906 have the same block size. Furthermore, a rectangular region 907 indicated by a thick frame is a region with its left side in contact with the left side of the square block 906 and the right side of the screen boundary of the reference filter image 905, with these two sides forming a distance M. FIG. 9 illustrates a case in which M = 5. Also, the right side of the rectangular region 907 and the left side of the square block 906 are the same line segment. Thus, the vertical size of the rectangular region 907 is N pixels, the same as the square block 906. Thus, the rectangular region 907 is an M×N-pixel rectangular region.

The inside of the rectangular region 907 defined by the horizontal size M and the vertical size N is filled with pixels inside the screen boundary of the reference filter image. In the example of FIG. 9, each circle marked with a number from 0 to 19 is a pixel group filling up the rectangular region 907 indicated with a thick line. Also, in the example of FIG. 9, the same pixel group is made up of 5×4 (= 20) pixels. In this manner, the pixel groups of the rectangular region 907 of the identified reference filter image are used in the current filter image to generate the rectangular region 904 with the same size as the rectangular region 907. The pixels included in the rectangular region 904 may be generated by simply replicating the same values as the pixels of the rectangular region 907 of the reference filter image or by applying a sharpening filter, a smoothing filter, or the like.

In this manner, the pixels belonging to the region 902 outside the screen boundary of the current filter image are generated via motion compensation pixel interpolation. However, all of the pixels of the region 902 are not limited to being generated. Pixels with an unknown value, from among the pixels outside the screen boundary, may be generated using simple replication pixel interpolation. For example, in a case where the left side of the square block 906 is located to the left of the left side of the reference filter image 905, the boundary block 903 references outside the screen boundary of the reference filter image 905, and thus the rectangular region 907 identified inside the screen boundary of the reference filter image would not have any pixels. Since then no pixels corresponding to the rectangular region 904 of the current filter image would be present, in this case, pixels outside the screen boundary to the left of the boundary block 903 are generated using simple replication pixel interpolation. Also, for pixels located further out from the pixel groups of the rectangular region 904 generated via motion compensation pixel interpolation, the pixels are generated using simple replication pixel interpolation. Also, even in a case where the upper side of the boundary block is in contact from the inner side with the upper side of the current filter image, where the right side of the boundary block is in contact from the inner side with the right side of the current filter image, and where the lower side of the boundary block is in contact from the inner side with the lower side of the current filter image, pixels located on the outer side of the pixel groups generated using motion compensation pixel interpolation are generated as in a case where the left side of the boundary block described above is in contact from the inner side with the left side of the reference picture. Accordingly, screen boundary pixels located in the left, right, up, and down direction of the current filter image are generated. Note that the pixels present in the upper-left, upper-right, lower-left, and lower-right regions are used to generate pixels outside the screen boundary via the simple replication pixel interpolation described above.

In this manner, the interpolation unit 114 interpolates pixels outside the screen boundary of the current picture using the simple replication pixel interpolation or the motion compensation pixel interpolation described above and outputs the processing result to the frame memory 108 as an interpolation image.

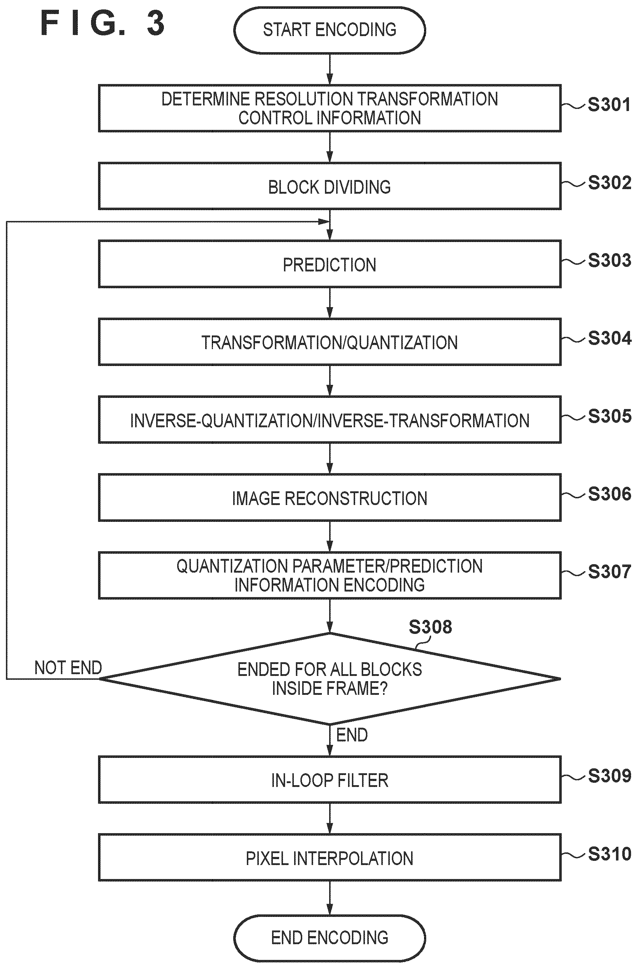

FIG. 3 is a flowchart illustrating encoding processing in the image encoding apparatus according to the present embodiment.

First, in step S301, the generation unit 103 determines offset information for the resolution transformation unit 113 to perform resolution transformation of the reference picture. Then, the generation unit 103 sets the determined offset information as the resolution transformation control information. To encode the resolution transformation control information, the generation unit 103 outputs the information to the integrated encoding unit 111.

In step S302, the block dividing unit 102 divides the input image frame by frame into units of basic blocks.

In step S303, the predicting unit 104 executes dividing processing on the image data in units of basic blocks generated in step S301 and generates sub-blocks. Then, the predicting unit 104 executes prediction processing per generated sub-block and generates prediction information including the block division, prediction mode, and the like and prediction image data. Then, the predicting unit 104 calculates the prediction error data from the input image data and the generated prediction image data. Specifically, the predicting unit 104 sets the prediction mode of the sub-block to inter prediction. Then, the predicting unit 104 generates a prediction block including pixels outside the screen boundary of the reference picture generated using pixels inside the screen boundary of an image for interpolation by the interpolation unit 114. Also, the predicting unit 104 generates prediction error data from the information of the prediction block and sub-block. Alternatively, the generation unit 103 uses the offset information of the current picture included in the resolution transformation control information and the offset information of each reference picture to calculate the resolution transformation magnification of each referenceable reference picture with respect to the current picture. Then, a resolution-transformed image for interpolation obtained via transformation of the image for interpolation is generated on the basis of the resolution transformation magnification described above. In this case, the predicting unit 104 sets the prediction mode of the sub-block to inter prediction. Then, the predicting unit 104 generates a prediction block including pixels outside the screen boundary of the reference picture generated using pixels inside the screen boundary of the resolution-transformed image for interpolation by the interpolation unit 114. Also, the predicting unit 104 generates prediction error data from the information of the prediction block and sub-block.

In step S304, the transformation/quantization unit 105 generates the transform coefficient via orthogonal-transforming of the prediction error data calculated in step S303. Then, the transformation/quantization unit 105 uses the quantization parameter to perform quantization of the transform coefficient and generates the residual coefficient.

In step S305, the inverse-quantization/inverse-transformation unit 106 performs inverse-quantizing/inverse-orthogonal-transforming of the residual coefficient generated in step S304 and reconstructs the prediction error. In the inverse-quantizing processing of the present step, the same parameter as the quantization parameter used in step S304 is used.

In step S306, the image reconstruction unit 107 reconstructs the prediction image on the basis of the prediction information generated in step S303. The image reconstruction unit 107 further reconstructs image data from the reconstructed prediction image and the prediction error generated in step S305.

In step S307, the encoding unit 110 encodes the prediction information generated in step S303 and the residual coefficient generated in step S304 together with the block division information and generates encoded data. The encoding unit 110 generates the bitstream further including other encoded data such as the quantization parameter.

In step S308, the control unit 100 determines whether or not encoding of all of the basic blocks inside the target frame (current picture) has ended. In a case where the control unit 100 determines that this has ended, the processing proceeds to step S309. Also, in a case where the control unit 100 determines that an unprocessed basic block still exists, the processing returns to step S303 in order to encode the next basic block.

In step S309, the in-loop filter unit 109 executes in-loop filter processing on the image data reconstructed in step S306 and generates a filter-processed image (filter image).

In step S310, the resolution transformation unit 113 retrieves the filter image of the current picture and the reference picture referenced for inter prediction by the boundary block of the current picture from the frame memory 108. Also, the resolution transformation unit 113 uses the resolution transformation control information supplied from the generation unit 103 to magnify or reduce the reference picture and generate the resolution transformation image. Next, the interpolation unit 114 uses simple replication pixel interpolation or motion compensation pixel interpolation to generate and interpolate a pixel group located outside the screen boundary of the filter image of the current picture adjacent to the boundary block of the filter image of the current picture. For each boundary block, in the case of using motion compensation pixel interpolation, the pixels outside the screen boundary are generated using pixels located inside the screen boundary of the resolution transformation image. Then, the interpolation unit 114 stores the interpolation image obtained by generating and interpolating pixels outside the screen boundary in the frame memory 108, and the processing ends.

The configuration and operations described above can improve the generation accuracy of the prediction image in motion compensation pixel interpolation by generating resolution transformation control information in step S301 in particular and magnifying or reducing a reference picture on the basis of resolution transformation control information in step S310. Also, the prediction error can be reduced by using such a prediction image. As a result, the data amount of the entire generated bitstream can be reduced, and the image quality of the encoded image can be improved.

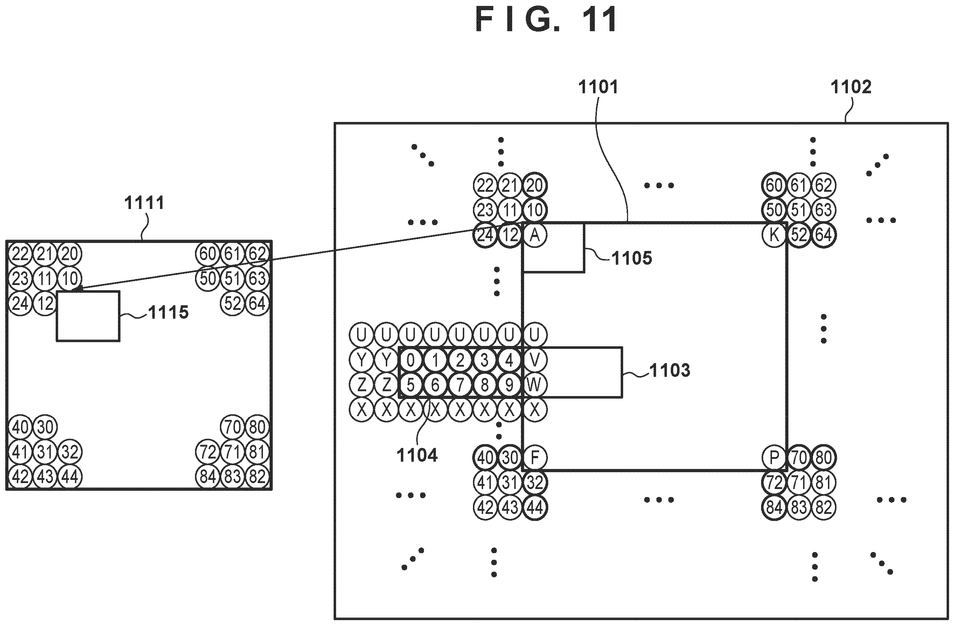

Note that in the present embodiment, the pixels outside the screen boundary of the reference picture not generated using motion compensation pixel interpolation are generated using the pixels inside the screen boundary of the reference picture. However, no such limitation is intended. A pixel calculated via motion compensation pixel interpolation outside the screen boundary located at the farthest place from the screen boundary of the reference picture may be set as an end pixel, and the end pixel may be further replicated or the average value between the end pixel and the pixel inside the screen boundary used in simple replication pixel interpolation may be replicated. A detailed example will now be described with reference to FIG. 11.

The thick frame in the center of the right diagram in FIG. 11 is the reference picture 1101, and a thin frame 1102 represents a region outside the screen boundary of the reference picture 1101. A region 1103 is a boundary block that is in contact at the left side with the left side of the reference picture 1101 from the left side. A region 1104 is generated using pixels of the picture encoded before the reference picture via motion compensation pixel interpolation and is in contact at the right side with the left side of the reference picture 1101 from the outer side. Ten pixels having numbers 0 to 9 fill the inside of the region 1104. Of these, pixels 0 and 5 are end pixels. In this case, a pixel Y located on the outer side of the region 1104 may have the same value as pixel V or may be the same value as the end pixel 0. Alternatively, the average value of the pixel V and the end pixel 0 may be used. Alternatively, the pixel Y may be calculated using either the average value, the median value, the maximum value, or the minimum value of a pixel group on a normal line of the left side of the boundary block where the pixel V exists, a pixel group on the normal line, or a pixel group including the pixel V included in the region 1103. Alternatively, the pixel Y may be calculated using either the average value, the median value, the maximum value, or the minimum value of the pixel group included in the region 1104, that is, the pixels 0 to 4. Alternatively, the pixel Y may be calculated using the average value, the median value, the maximum value, or the minimum value of a pixel group of the pixel group on the normal line including the region 1103 and the region 1104. Furthermore, the pixel Y may be calculated using either the average value, the median value, the maximum value, or the minimum value of values calculated using the pixel group of the region 1104 and the values calculated using the pixel group of the region 1103. Also, in a similar manner, a pixel Z may be calculated using the pixels on the normal line of the left side of the boundary block where a pixel W exists. As a result, an interpolation pixel can be generated with good accuracy by selecting the average value, the median value, the maximum value, or the minimum value depending on the characteristics of the pixel group used in calculating. In other words, in a case where the pixel value of the pixel group used in calculating varies, by using the average value, pixels with a high accuracy that are not affected by the variation can be generated. In the case of using the median value, pixels with a high accuracy that are not affected by outliers can be generated. Also, in a case where, in the pixel group used in calculating, the value of a pixel inside the screen boundary or an end pixel used in simple replication pixel interpolation is a value significantly less than other values, the maximum value is used. In a case where the value of a pixel inside the screen boundary or an end pixel used in simple replication pixel interpolation is a value significantly greater than the other values, the minimum value is used. In this manner, the effects of localized noise can be avoided. Note that, even in a case where the upper side of the boundary block is in contact from the inner side with the upper side of the reference picture, where the right side of the boundary block is in contact from the inner side with the right side of the reference picture, and where the lower side of the boundary block is in contact from the inner side with the lower side of the reference picture, pixels located on the outer side of the pixel groups generated using motion compensation pixel interpolation may be generated as in a case where the left side of the boundary block described above is in contact from the inner side with the left side of the reference picture. In this manner, taking into account the value of the pixel group generated via motion compensation interpolation, a pixel located on the outer side of the pixel group generated using motion compensation pixel interpolation can be generated. This can reduce discontinuity between interpolated pixels outside the screen boundary and allows for efficient encoding of a prediction error signal of the sub-block to be encoded.

Also, in the present embodiment, the pixels in the upper-left, upper-right, lower-left, and lower-right regions are generated using the pixels located in the four corners inside the screen boundary of the reference picture. However, no such limitation is intended. These may be calculated using the pixels on the outer side of the pixels in the four corners of the reference picture. A detailed example will now be described using FIG. 11. The rectangular regions of FIG. 11 are as described above and thus will not be described. However, an image for interpolation 1111 is an image referenced via inter prediction by a boundary block 1105 located in the upper-left corner of the reference picture 1101, and a region 1115 is a prediction block corresponding to the boundary block 1105.

Pixels 10, 12, 20, and 24 are generated via motion compensation pixel interpolation for the pixel A in the upper-left corner of the reference picture 1101. In this case, pixels 11, 21, 22, and 23 of the reference picture 1101 may be generated from pixels 11, 21, 22, and 23 of the image for interpolation 1111. Accordingly, a pixel located at the upper-left of the reference picture can be generated more accurately than via simple replication of the pixel A. Alternatively, the pixel 11 may be generated using the average value of pixels 10 and 12. Alternatively, the pixel 11 may be generated using either the average value or the median value of the pixels 10, 12, and A. Also, the pixels 21 to 23 may be generated using the average value of pixels 20 and 24. Alternatively, the pixels 21 to 23 may be generated using either the average value or the median value of the pixels 20, 24, and A. By using the average value, a pixel reflecting the state of the signal in the left direction and the upper direction of the reference picture can be generated. In the case of using the median value, a pixel not affected by outliers can be generated.

Pixels 50, 52, 60, and 64 are generated via motion compensation pixel interpolation for the pixel K in the upper-right corner of the reference picture 1101. In this case, pixels 51, 61, 62, and 63 of the reference picture 1101 may be generated from pixels 51, 61, 62, and 63 of the image for interpolation 1111. Accordingly, a pixel located at the upper-right of the reference picture can be generated more accurately than via simple replication of the pixel K. Alternatively, the pixel 51 may be generated using the average value of pixels 50 and 52. Alternatively, the pixel 51 may be generated using either the average value or the median value of the pixels 50, 52, and K. Also, the pixels 61 to 63 may be generated using the average value of pixels 60 and 64. Alternatively, the pixels 61 to 63 may be generated using either the average value or the median value of the pixels 60, 64, and K. By using the average value, a pixel reflecting the state of the signal in the upper direction and the right direction of the reference picture can be generated. In the case of using the median value, a pixel not affected by outliers can be generated.

Pixels 30, 32, 40, and 44 are generated via motion compensation pixel interpolation for the pixel F in the lower-left corner of the reference picture 1101. In this case, pixels 31, 41, 42, and 43 of the reference picture 1101 may be generated from pixels 31, 41, 42, and 43 of the image for interpolation 1111. Accordingly, a pixel located at the upper-left of the reference picture can be generated more accurately than via simple replication of the pixel F. Alternatively, the pixel 31 may be generated using the average value of pixels 30 and 32. Alternatively, the pixel 31 may be generated using either the average value or the median value of the pixels 30, 32, and F. Also, the pixels 41 to 43 may be generated using the average value of pixels 40 and 44. Alternatively, the pixels 41 to 43 may be generated using either the average value or the median value of the pixels 40, 44, and F. By using the average value, a pixel reflecting the state of the signal in the left direction and the lower direction of the reference picture can be generated. In the case of using the median value, a pixel not affected by outliers can be generated.

Pixels 70, 72, 80, and 84 are generated via motion compensation pixel interpolation for the pixel P in the lower-right corner of the reference picture 1101. In this case, pixels 71, 81, 82, and 83 of the reference picture 1101 may be generated from pixels 71, 81, 82, and 83 of the image for interpolation 1111. Accordingly, a pixel located at the upper-left of the reference picture can be generated more accurately than via simple replication of the pixel P. Alternatively, the pixel 71 may be generated using the average value of pixels 70 and 72. Alternatively, the pixel 71 may be generated using either the average value or the median value of the pixels 70, 72, and P. Also, the pixels 81 to 83 may be generated using the average value of pixels 80 and 84. Alternatively, the pixels 81 to 83 may be generated using either the average value or the median value of the pixels 80, 84, and P. By using the average value, a pixel reflecting the state of the signal in the right direction and the lower direction of the reference picture can be generated. In the case of using the median value, a pixel not affected by outliers can be generated.

In this manner, taking into account the value of the pixel group generated via motion compensation interpolation, a pixel located on the upper-left, upper-right, lower-left, and lower-right of the reference picture surrounding the pixel group generated using motion compensation pixel interpolation can be generated. This can reduce discontinuity between interpolated pixels outside the screen boundary and allows for efficient encoding of a prediction error signal of the sub-block to be encoded.

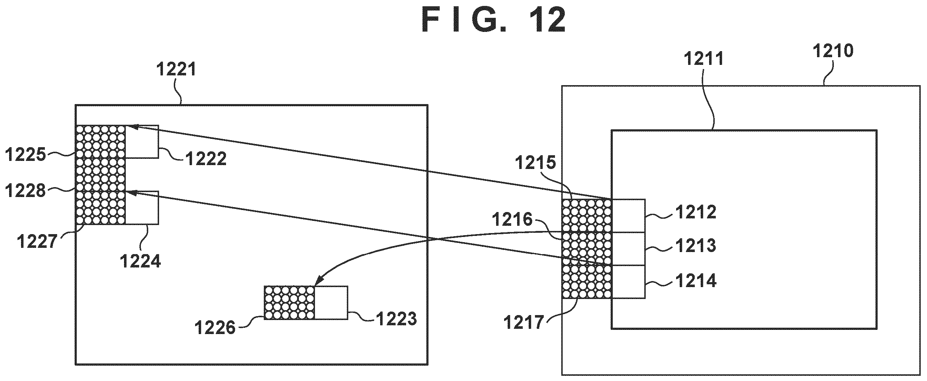

Note that in the present embodiment described above, on the basis of motion information of each boundary block, pixels located outside the screen boundary of the reference picture are generated without referencing the motion information of other boundary blocks. However, the present embodiment is not limited thereto. Motion compensation pixel interpolation may be performed referencing the motion information of the boundary block located up/down or left/right of the boundary block to be processed. A detailed example will now be described using FIG. 12. The thick frame in the right diagram of FIG. 12 is the screen boundary of a reference picture 1211, and a thin frame 1210 represents a region outside the boundary of the reference picture 1211. Also, the left sides of boundary blocks 1212, 1213, and 1214 are in contact from the inner side with the left side of the reference picture; and regions 1215, 1216, and 1217 corresponding to each boundary block are generated using pixels located inside the screen boundary of a resolution-transformed image for interpolation 1221 obtained via resolution transformation of a picture encoded before the reference picture via motion compensation pixel interpolation. The right sides of these regions are in contact from the outer side with the left side of the reference picture. For each boundary block located inside the reference picture 1211, on the basis of the prediction information of each boundary block sequentially from the upper-left to the lower-right, a rectangular region of the resolution-transformed image for interpolation 1221 obtained using inter prediction located inside the screen boundary of the resolution-transformed image for interpolation 1221 is identified. In FIG. 12, the regions used in inter prediction corresponding to the boundary blocks 1212, 1213, and 1214 are represented by boundary blocks 1222, 1223, and 1224, and rectangular regions 1225, 1226, and 1227 adjacent to each block are used to generate regions 1215, 1216, and 1217, which are pixel groups outside the screen region of the reference picture. Furthermore, the motion vector for the boundary block 1212 and the boundary block 1214 are the same. In this case, the region 1223, which is a region used in inter prediction indicated by the motion information of the boundary block 1213, is not adjacent to the boundary block 1222 and the boundary block 1224. However, the motion vector of the boundary block 1212 and the boundary block 1214 are the same, and the relative positional relation between the boundary block 1212 and the boundary block 1214 is the same as the relative positional relation between the boundary block 1222 and the boundary block 1224. In a zoom scene with a set scaling window, since an object in the scene is magnified or reduce to the same size via resolution transformation, it can be thought that the motion vector produced by inter prediction reflects the global motion of the entire screen. Thus, in such a case, the pixels of the region 1216 may be generated using a region 1228 between the rectangular region 1225 and the rectangular region 1227 instead of the pixels of the region 1226. In this manner, for the left side of the reference picture, in the case of executing correction processing for motion compensation pixel interpolation of the boundary block to be processed using motion information of the adjacent boundary block, 1 may be encoded for a flag indicating execution of correction processing of the left side of the reference picture, and in the case of not executing correction processing, 0 may be encoded for a flag indicating no execution of correction processing. Note that, even in a case where the right side of the boundary block is in contact from the inner side with the right side of the reference picture, where the upper side of the boundary block is in contact from the inner side with the upper side of the reference picture, and where the lower side of the boundary block is in contact from the inner side with the lower side of the reference picture, pixels located on the outer side of the pixel groups generated using motion compensation pixel interpolation may be generated as in a case where the left side of the boundary block described above is in contact from the inner side with the left side of the reference picture. In this case, 1 is encoded for a flag indicating execution of correction processing of the right side of the reference picture, and in the case of not executing correction processing, 0 is encoded for a flag indicating no execution of correction processing. Alternatively, 1 may be encoded for a flag indicating execution of correction processing of the upper side of the reference picture, and in the case of not executing correction processing, 0 may be encoded or a flag indicating no execution of correction processing. 1 may be encoded for a flag indicating execution of correction processing of the lower side of the reference picture, and in the case of not executing correction processing, 0 may be encoded for a flag indicating no execution of correction processing. In this manner, by controlling whether or not to execute correction processing for each side of the reference picture, execution of correction processing can be limited to only the sides to be improved for interpolation accuracy via correction processing. By executing processing in this manner, the interpolation accuracy of pixels interpolated outside the screen boundary is improved, and a prediction error signal of a sub-block to be encoded can be efficiently encoded.

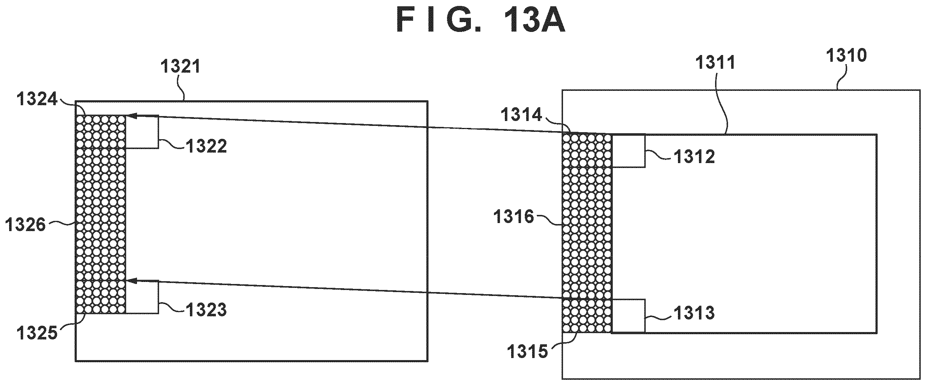

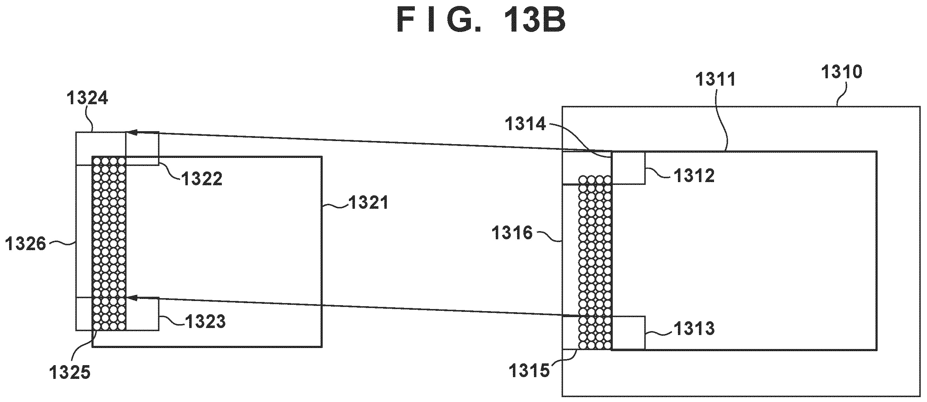

Note that in the present embodiment, on the basis of the motion information of each boundary block, for all of the boundary blocks in contact with the inner side in the screen boundary of the reference picture, the pixels located outside the screen boundary of the reference picture are generated using motion compensation pixel interpolation. However, the present embodiment is not limited to this. For each side surrounding the reference picture, the pixels outside the screen boundary may be collectively generated for the rectangular region between each rectangular region adjacent to the boundary blocks in the four corners. A detailed example will now be described with reference to FIGS. 13A and 13B.

The thick frame in FIGS. 13A and 13B is the screen boundary of a reference picture 1311, and a thin frame 1310 represents a region outside the boundary of the reference picture 1311. Also, the left side of boundary blocks 1312 and 1313 are in contact from the inner side with the left side of the reference picture. Regions 1314 and 1315 corresponding to each boundary block are generated using pixels located inside the screen boundary of a resolution-transformed image for interpolation 1321 obtained via resolution transformation of a picture encoded before the reference picture via motion compensation pixel interpolation. The regions 1314 and 1315 are in contact at the right side with the left side of the reference picture from the outer side. First, motion compensation pixel interpolation is executed for the boundary blocks located in the upper-left corner, the upper-right corner, the lower-left corner, and the lower-right corner. For each boundary block other than the boundary blocks located in the upper-left corner, the upper-right corner, the lower-left corner, and the lower-right corner, from among the boundary blocks located inside the reference picture 1311, on the basis of the prediction information of each boundary block sequentially from the upper-left to the lower-right, a rectangular region of the resolution-transformed image for interpolation 1321 obtained using inter prediction located inside the screen boundary of the resolution-transformed image for interpolation 1321 is identified. In FIGS. 13A and 13B, the regions used in inter prediction corresponding to the boundary blocks 1312 and 1313 are represented by prediction blocks 1322 and 1323, and rectangular regions 1324 and 1325 adjacent to each prediction block are used to generate regions 1314 and 1315, which are pixel groups outside the screen region of the reference picture. Furthermore, the motion vector for the boundary block 1312 and the region 1314 are the same.

In the case illustrated in FIG. 13A, the motion vector of the boundary block 1312 and the boundary block 1313 are the same, and the relative positional relation between the region 1314 and the region 1315 is the same as the relative positional relation between the region 1324 and the region 1325. In a zoom scene with a set scaling window, since an object in the scene is magnified or reduce to the same size via resolution transformation, it can be thought that the motion vector produced by inter prediction reflects the global motion of the entire screen. Thus, in such a case, a region 1316 may be generated using a region 1326 between the region 1324 and the region 1325. In this manner, in a case where, for each boundary block between the boundary block 1312 and the boundary block 1313, instead of performing motion compensation pixel interpolation, collective interpolation processing is executed to interpolate the pixels located to the left of the screen boundary of the reference picture, 1 may be encoded for a flag indicating execution of the collective interpolation processing, and in the case of not executing collective interpolation processing, 0 may be encoded for a flag indicating no execution of collective interpolation processing.

In the case illustrated in FIG. 13B, the motion vector of the boundary block 1312 and the boundary block 1313 are the same, and the relative positional relation between the region 1314 and the region 1315 is the same as the relative positional relation between the region 1324 and the region 1325. In a zoom scene with a set scaling window, since an object in the scene is magnified or reduce to the same size via resolution transformation, it can be thought that the motion vector produced by inter prediction reflects the global motion of the entire screen. Thus, in such a case, the region 1316 may be generated using the region 1326 between the region 1324 and the region 1325. However, in the case of FIG. 13B, one or more of the pixel groups included in the region 1326 are pixels outside the screen boundary of the resolution-transformed image for interpolation 1321. Thus, in this case, only the pixels included in a region in which the region 1326 and the region of the resolution-transformed image for interpolation 1321 overlap may be replicated in the region 1316. Also, for the pixels of the region 1316 other than the replicated pixels, pixels may be interpolated using the single replication pixel interpolation described above. In this manner, in a case where, for each boundary block between the boundary block 1312 and the boundary block 1313, instead of performing motion compensation pixel interpolation, collective interpolation processing is executed to interpolate the pixels located to the left of the screen boundary of the reference picture, 1 may be encoded for a flag indicating execution of the collective interpolation processing, and in the case of not executing collective interpolation processing, 0 may be encoded for a flag indicating no execution of collective interpolation processing.

Note that, even in a case where the right side of the boundary block is in contact from the inner side with the right side of the reference picture, where the upper side of the boundary block is in contact from the inner side with the upper side of the reference picture, and where the lower side of the boundary block is in contact from the inner side with the lower side of the reference picture, pixels located on the outer side of the pixel groups generated using motion compensation pixel interpolation may be generated as in a case where the left side of the boundary block described above is in contact from the inner side with the left side of the reference picture. In this case, 1 is encoded for a flag indicating execution of correction processing of the right side of the reference picture, and in the case of not executing correction processing, 0 is encoded for a flag indicating no execution of correction processing. Alternatively, 1 may be encoded for a flag indicating execution of correction processing of the upper side of the reference picture, and in the case of not executing correction processing, 0 may be encoded for a flag indicating no execution of correction processing. 1 may be encoded for a flag indicating execution of correction processing of the lower side of the reference picture, and in the case of not executing correction processing, 0 may be encoded for a flag indicating no execution of correction processing. In this manner, by controlling whether or not to execute correction processing for each side of the reference picture, execution of correction processing can be limited to only the sides to be improved for interpolation accuracy via correction processing.

By executing processing in this manner, on the basis of the processing result of the boundary blocks located in the four corners of the reference picture instead of all the boundary blocks, the execution of motion compensation pixel interpolation of the other boundary blocks can be controlled, and pixels outside the screen boundary of the reference picture can be generated with a smaller amount of processing compared to a case of executing collective pixel interpolation.

Note that in the present embodiment, the image data is input frame by frame and encoding processing is executed to generate and output a bitstream. However, the target of the encoding processing is not limited to image data. For example, a feature amount used in machine learning for object recognition or the like may be input in a two-dimensional form, and encoding processing may be executed to encode a bitstream. In this manner, feature amount data used in machine learning can be efficiently encoded.

### Second Embodiment

The second embodiment described below is an image decoding apparatus that encodes encoded data (a bitstream) output by the image encoding apparatus of the first embodiment described above.

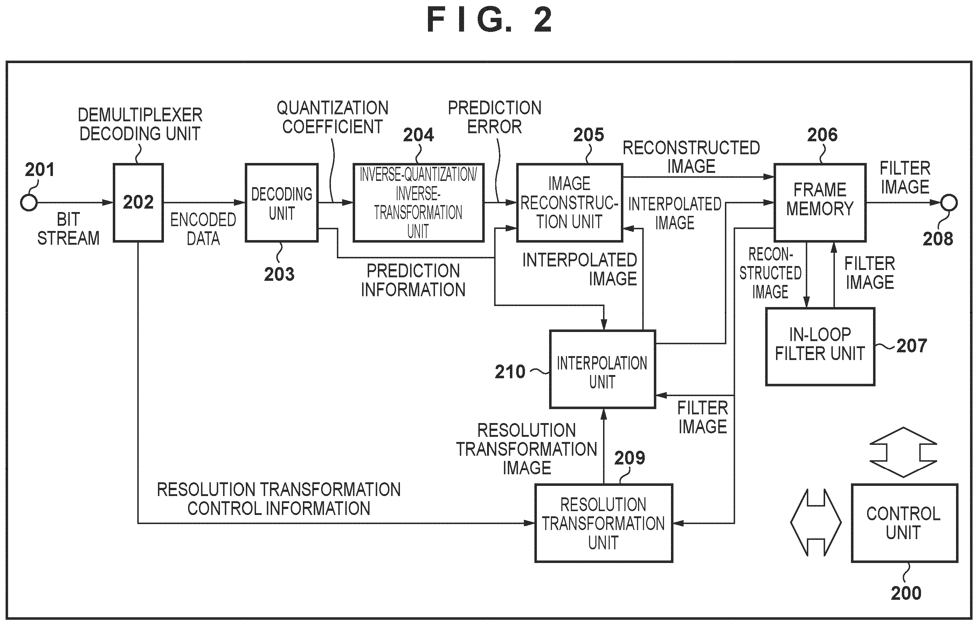

FIG. 2 is a block configuration diagram illustrating the configuration of the image decoding apparatus according to the second embodiment. A control unit 200 that controls the entire apparatus includes a CPU and a memory that stores a program for executing the CPU.

A terminal 201 is an input terminal for the input of an encoded bitstream. A demultiplexer decoding unit 202 demultiplexes the bitstream input via the terminal 201 into information relating to decoding processing, encoded data relating to the residual coefficient, and the like. Also, the demultiplexer decoding unit 202 decodes the encoded data that exists in the header portion of the bitstream. The demultiplexer decoding unit 202 according to the present embodiment decodes the resolution transformation control information and outputs it to a later stage. The demultiplexer decoding unit 202 can be thought of as performing the opposite operations of the integrated encoding unit 111 of FIG. 1.

A decoding unit 203 obtains the residual coefficient and the prediction information by decoding the encoded data output from the demultiplexer decoding unit 202.

An inverse-quantization/inverse-transformation unit 204 performs inverse-quantization of the residual coefficient input in units of blocks and obtains the prediction error by further performing inverse-orthogonal-transforming.

A frame memory 206 is memory that stores the reconstructed picture image data.

An image reconstruction unit 205 reconstructs the prediction image data using the prediction information input from the decoding unit 203 and the interpolation image data input from an interpolation unit 210. Then, the image reconstruction unit 205 generates reconstructed image data from the prediction image data and the prediction error data reconstructed by the inverse-quantization/inverse-transformation unit 204 and outputs the reconstructed image data.

In a similar manner to the in-loop filter unit 109 of FIG. 1, an in-loop filter unit 207 executes in-loop filtering processing such as deblocking filtering on the reconstructed image and outputs a filter-processed image.

A resolution transformation unit 209 magnifies or reduces the filter image stored in the frame memory 206 on the basis of the resolution transformation control information, generates a resolution transformation image, and outputs this as the resolution transformation image.

The interpolation unit 210 appropriately references the resolution transformation image output by the resolution transformation unit 209, the prediction information output by the decoding unit 203, and the filter image stored in the frame memory 206 and generates interpolation image data. Then, the interpolation unit 210 outputs the generated interpolation image data to the image reconstruction unit 205. Note that the interpolation unit 210 may store image data including generated out-of-screen pixel information in the frame memory 206 as an interpolation image. Also, the interpolation unit 210 may retrieve the generated interpolation image from the frame memory 206 and may output it to the image reconstruction unit 205.

The image data of the current frame stored in the frame memory 206 is output to an external unit via a terminal 208.

Image decoding operations in the image decoding apparatus described above will be described below. The image decoding apparatus according to the present embodiment decodes a bitstream generated at the image encoding apparatus according to the first embodiment. As illustrated in FIG. 2, the control unit 200 is a processor that controls the entire image decoding apparatus, and a bitstream input from the terminal 201 is input to the demultiplexer decoding unit 202.

The demultiplexer decoding unit 202 demultiplexes the bitstream into information relating to decoding processing and encoded data relating to a coefficient and decodes the encoded data that exists in the header portion of the bitstream. Specifically, the demultiplexer decoding unit 202 first decodes the resolution transformation control information from the picture header of the bitstream illustrated in FIG. 6A. Then, the demultiplexer decoding unit 202 outputs the decoded and obtained resolution transformation control information to the resolution transformation unit 209. Furthermore, the demultiplexer decoding unit 202 outputs the encoded data to the decoding unit 203 in units of blocks of picture data. Note that the decoded resolution transformation control information includes offset information indicating the horizontal size and vertical size of the current picture and the scaling window of the current picture. The offset information is offset information corresponding the distance from the left side, the right side, the upper side, and the lower side of the current picture. The offset with respect to each side is represented by a number of pixels. Also, the same offset is represented by a positive value if it is offset in the direction from the picture screen boundary toward the center and a negative value if it is offset in the direction from the screen boundary to the outside. For both the horizontal direction and the vertical direction, the resolution magnification ratio representing the magnification ratio or the reduction ratio of the reference picture with respect to the current picture is calculated. The resolution transformation magnification in the horizontal direction and the vertical direction are obtained using the following formula. Resolution transformation magnification in horizontal direction = (horizontal size of reference picture - left side offset R - right side offset R)/(horizontal size of current picture - left side offset C - left side offset C) Resolution transformation magnification in vertical direction = (vertical size of reference picture - upper side offset R - lower side offset R)/(vertical size of current picture - upper side offset C - lower side offset C) According to these formulas, the demultiplexer decoding unit 202 calculates the resolution transformation magnification with respect to the current picture for all of the reference pictures that can be referenced in the decoding of the current picture.

The decoding unit 203 decodes the encoded data and obtains the residual coefficient, the prediction information, and the quantization parameter. Then, the decoding unit 203 outputs the residual coefficient and the quantization parameter to the inverse-quantization/inverse-transformation unit 204 and outputs the obtained prediction information to the image reconstruction unit 205.

The inverse-quantization/inverse-transformation unit 204 performs inverse-quantization on the input residual coefficient and generates an orthogonal-transformation coefficient. Furthermore, the inverse-quantization/inverse-transformation unit 204 performs inverse-orthogonal-transforming on the generated orthogonal-transformation coefficient and generates a prediction error. Note that the quantization parameter used in the inverse-quantizing of each sub-block by the inverse-quantization/inverse-transformation unit 204 is the same as the quantization parameter used on the encoding side. The inverse-quantization/inverse-transformation unit 204 outputs the obtained prediction information to the image reconstruction unit 205.

The image reconstruction unit 205 generates a prediction image on the basis of the interpolation image after generation of pixels outside the screen boundary input from the interpolation unit 210 and the prediction information input from the decoding unit 203. Then, the image reconstruction unit 205 reconstructs the image data from the prediction image and the prediction error input from the inverse-quantization/inverse-transformation unit 204 and stores the reconstructed image data in the frame memory 206. The image data stored in the frame memory 206 is used by being referenced when predicting in the subsequent decoding of the sub-block to be decoded.

In the present embodiment, in generating the prediction image, the pixels outside the screen boundary of the reference picture are generated using simple replication pixel interpolation or motion compensation pixel interpolation in inter prediction in conjunction with resolution transformation of the reference picture. A detailed generation method will now be described with reference to FIGS. 10A and 10B. FIGS. 10A and 10B illustrate a case in which the decoding unit 203 decodes the sub-block 1002 using inter prediction. The current picture 1001 indicated by a thick frame in the right diagram is the decoding target, and the reference picture 1011 indicated by the thick frame in the central diagram is the picture referenced by the sub-block of the current picture. The thin frame 1010 is a region including pixels outside the screen boundary of the reference picture 1011, and the pixels outside the screen boundary are generated via simple replication pixel interpolation or motion compensation pixel interpolation. The prediction image 1012 of the reference picture 1011 represents the prediction block of the sub-block 1002 identified by the image reconstruction unit 205 on the basis of the prediction information. The left side of the boundary block 1013 and the left side of the boundary block 1014 are in contact from the inner side with the left side of the reference picture 1011. Also, the prediction mode of the boundary block 1013 and the boundary block 1014 is inter prediction. Also, the rectangular region 1015 and the rectangular region 1016 are filled with pixels generated by simple replication pixel interpolation or motion compensation pixel interpolation. Note that the upper side of the boundary block may be in contact from the inner side with the upper side of the reference picture. Also, the right side of the boundary block may be in contact from the inner side with the right side of the reference picture. Furthermore, the lower side of the boundary block may be in contact from the lower side with the right side of the reference picture. In any case, as with the case where the left side of the boundary block is in contact from the inner side with the left side of the reference picture, the interpolation unit 210 generates the pixels outside the screen boundary of the reference picture 1011 using simple replication pixel interpolation or motion compensation pixel interpolation. Also, in the case of using motion compensation pixel interpolation, the interpolation unit 210 generates pixels outside the screen boundary of the reference picture not generated using motion compensation pixel interpolation via simple replication pixel interpolation using the pixels of the screen boundary of the reference picture. Then, in the motion compensation pixel interpolation of each boundary block, on the basis of the motion information of each boundary block, for each of all the boundary blocks in contact with the inner side inside the boundary block of the reference picture, the interpolation unit 210 generates the pixels located outside the screen boundary of the reference picture using motion compensation pixel interpolation. Also, in the processing of each boundary block, the interpolation unit 210 generates the pixels located outside the screen boundary of the reference picture without referencing the motion information of other boundary blocks.

In the example illustrated in FIG. 10A, an image for interpolation 1021 is a filter image used in inter prediction of the boundary block of the reference picture 1011 and is a picture retrieved from the frame memory 206. Also, the values of the pixels inside the screen boundary of the image for interpolation 1021 correspond to a picture used to generate pixels outside the screen boundary of the reference picture 1011 via motion compensation pixel interpolation. The image for interpolation 1021 and the reference picture 1011 are not set with a scaling window and all offsets are 0. Thus, the resolution transformation magnification is 1 in the horizontal and vertical direction, and there is no need to perform resolution transformation of the image for interpolation 1021 in inter prediction of the boundary block 1013. As a result, the prediction block 1023 corresponding to the boundary block 1013 located inside the prediction image 1012 is located inside the screen boundary of the image for interpolation 1021. In a similar manner, a prediction block 1024 corresponding to the boundary block 1014 located inside the prediction image 1012 is located inside the screen boundary of the image for interpolation 1021. Accordingly, the interpolation unit 210 uses the pixel group of a rectangular region 1025 of the image for interpolation 1021 to generate pixels of the rectangular region 1015 located outside the screen boundary of the reference picture. In a similar manner, the interpolation unit 210 uses the pixel group of the rectangular region 1026 of the image for interpolation 1021 to generate pixels of the rectangular region 1016 located outside the screen boundary of the reference picture. Accordingly, the interpolation unit 210 generates pixels outside the screen boundary of the reference picture constituting the prediction image 1012 of the reference picture 1011 referenced by inter prediction of the sub-block 1002 via motion compensation pixel interpolation using the pixels inside the screen boundary of the image for interpolation 1021. Also, for all of the boundary blocks of the reference picture 1011, the interpolation unit 210 stores the reference picture obtained by completing interpolation of the outside the screen boundary of the reference picture generated by executing motion compensation pixel interpolation in the frame memory 206.

In the example illustrated in FIG. 10B, the offsets of the scaling window set in the image for interpolation 1021 and the reference picture 1011 are not 0. In other words, in inter prediction of the boundary block 1013, resolution transformation needs to be performed on the image for interpolation 1021. Thus, the prediction block 1023 corresponding to the boundary block 1013 located inside the prediction image 1012 is located inside the screen boundary of the resolution-transformed image for interpolation obtained via resolution transformation on the basis of offset information of the image for interpolation 1021 and the reference picture 1011, instead of the image for interpolation 1021. In a similar manner, the prediction block 1024 corresponding to the boundary block 1014 located inside the prediction image 1012 is located inside the screen boundary of the resolution-transformed image for interpolation 1022, instead of the image for interpolation 1021.

The processing for generating the resolution-transformed image for interpolation 1022 from the image for interpolation 1021 will now be described. To simplify the description, in this example, the image for interpolation 1021 is set with a scaling window, and the current picture 1001 and the reference picture 1011 are not set with a scaling window. However, no such limitation is intended, and the current picture 1001 and the reference picture 1011 may be set with a scaling window. In the example of FIG. 10B, horizontal size of the reference picture 1011 and the image for interpolation 1021 is set to 1920 pixels, and the vertical size is set to 1080 pixels. Also, the left side offset and the right side offset set for the image for interpolation 1021 are both 240 pixels, and the upper side offset and the lower side offset are both 135 pixels. Also, the offsets of the four sides of the reference picture 1011 are 0 pixels. In this case, the resolution transformation magnification is calculated to be 0.75 in the horizontal direction and the vertical direction using the calculation formula described above. Thus, the resolution-transformed image for interpolation 1022 is an image of the image for interpolation 1021 magnified by 4/3 times, which is the multiplicative inverse of 0.75. In this manner, the resolution-transformed image for interpolation 1022 is generated from the image for interpolation 1021 on the basis of the offset information set for the reference picture 1011 and the image for interpolation 1021.

In FIG. 10B, the prediction image 1012 indicated by a rectangular region of the reference picture 1011 represents the image of the sub-block 1002 generated by the image reconstruction unit 205 via inter prediction. Also, the prediction mode of the boundary blocks 1013 and 1014 of the reference picture 1011 included in the prediction image 1012 is inter prediction, and a motion vector is generated for the prediction blocks 1023 and 1024 inside the screen boundary of the resolution-transformed image for interpolation 1022. Also, the left side of the boundary block 1013 and the boundary block 1014 are in contact from the inner side with the left side of the reference picture 1011. At this time, an offset is set for either the image for interpolation 1021 normally referenced by the boundary block of the reference picture 1011 or the reference picture 1011. Thus, the prediction image used in inter prediction of the boundary blocks 1013 and 1014 corresponds to the resolution-transformed image for interpolation 1022 obtained via resolution transformation of the image for interpolation 1021 as described above, instead of the image for interpolation 1021. Thus, the prediction block 1023 corresponding to the boundary block 1013 is located inside the screen boundary of the resolution-transformed image for interpolation 1022. In a similar manner, the prediction block 1024 corresponding to the boundary block 1014 is also located inside the screen boundary of the resolution-transformed image for interpolation 1022. Furthermore, one or more of the pixel groups of the prediction image 1012 correspond to pixels of the rectangular region 1015 and the rectangular region 1016 formed by pixels outside the screen boundary of the reference picture 1011. The pixels of the rectangular region 1015 and the rectangular region 1016 are generated using simple replication pixel interpolation or motion compensation pixel interpolation as described above. Specifically, the pixel group of the rectangular region 1015 located to the left of the boundary block 1013 is generated using the rectangular region 1025 located inside the screen boundary of the resolution-transformed image for interpolation 1022 referenced by the boundary block 1013. In a similar manner, the pixel group of the rectangular region 1016 located to the left of the boundary block 1014 is generated using the rectangular region 1026 located inside the screen boundary of the resolution-transformed image for interpolation 1022 referenced by the boundary block 1014. The interpolation unit 210 generates pixels outside the screen boundary of the reference picture constituting the prediction image 1012 of the reference picture 1011 referenced by inter prediction of the sub-block 1002 via motion compensation pixel interpolation using the pixels inside the screen boundary of the resolution-transformed image for interpolation 1022. Also, for all of the boundary blocks of the reference picture 1011, the interpolation unit 210 stores the reference picture obtained by completing interpolation of the outside the screen boundary of the reference picture generated by executing motion compensation pixel interpolation in the frame memory 206.

As with the in-loop filter unit 109 in the encoding apparatus of FIG. 1, the in-loop filter unit 207 reads out the reconstructed image from the frame memory 206 and executes in-loop filter processing such as deblocking and sample adaptive offset. The in-loop filter unit 207 re-stores the updated post-filter-processing image in the frame memory 206.

The resolution transformation unit 209 magnifies or reduces the image stored in the frame memory 206 on the basis of the resolution transformation control information. Also, the resolution transformation unit 209 outputs the magnified or reduced image as the resolution transformation image. The resolution transformation filter used in the resolution transformation is not particularly limited, and the user may input one or more resolution transformation filters or may use a value designated in advance as the initial value. Also, the resolution transformation unit 209 may switch between a plurality of resolution transformation filters depending on the resolution transformation magnification calculated using the offset information and generate a resolution transformation image.

The interpolation unit 210 appropriately references the resolution transformation image output by the resolution transformation unit 209, the prediction information output by the decoding unit 203, and the filter image stored in the frame memory 206, and depending on the value of the flag indicating execution of motion compensation pixel interpolation decoded by the demultiplexer decoding unit 202, generates image data with interpolated pixels outside the screen boundary of the current picture using simple replication pixel interpolation or motion compensation pixel interpolation. Specifically, in a case where the decoded flag is 1, the interpolation unit 210 generates image data by performing motion compensation pixel interpolation for the pixels outside the screen boundary. In a case where the decoded flag is 0, the interpolation unit 210 generates image data by performing simple replication pixel interpolation for the pixels outside the screen boundary. Then, the interpolation unit 210 outputs the generated image data to the image reconstruction unit 205 as the interpolation image. Also, in a case where out-of-screen pixel information of the filter image is included in the generated image data, the interpolation unit 210 may output image data including the generated out-of-screen pixel information to the frame memory 206 as the interpolation image. The details of the processing of the simple replication pixel interpolation and the motion compensation pixel interpolation are the same as in the image encoding apparatus of the first embodiment and thus will not be described.

The reconstructed image stored in the frame memory 206 is ultimately output to an external unit from the terminal 208.

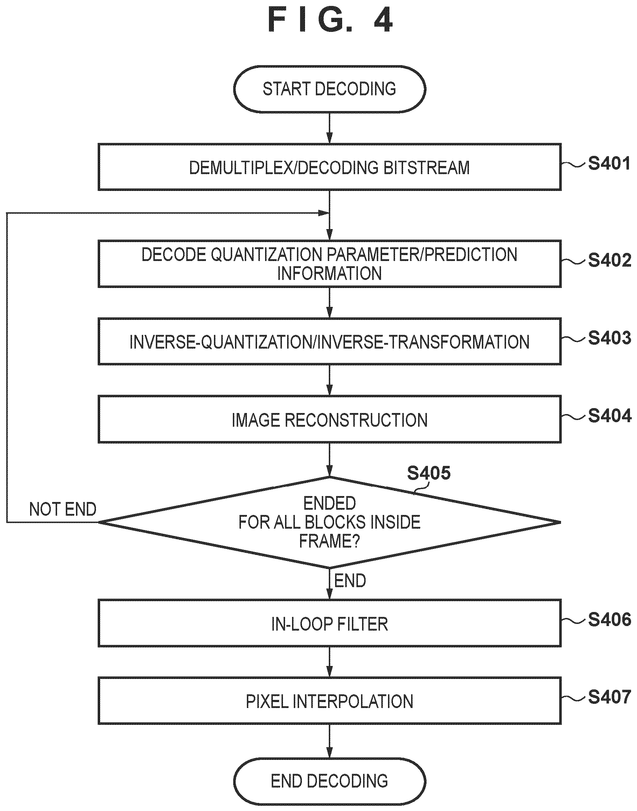

FIG. 4 is a flowchart illustrating the image decoding processing of the image decoding apparatus according to the present embodiment.

In step S401, the demultiplexer decoding unit 202 decodes the encoded data of the header portion from the input bitstream and obtains the resolution transformation control information. Also, the demultiplexer decoding unit 202 demultiplexes the bitstream into information relating to decoding processing, encoded data relating to a coefficient, and the like. In the present embodiment, as the control information relating to resolution transformation, the horizontal size and the vertical size of the current picture to be decoded and the offset information of the current picture are decoded. Specifically, the demultiplexer decoding unit 202 decodes, as the resolution transformation control information, the horizontal number of pixels and vertical number of pixels of the current picture and offset information including the left side offset, the right side offset, the upper side offset, and the lower side offset. Each offset is a number of pixels and includes a sign indicating plus or minus. Also, the demultiplexer decoding unit 202 also decodes the flag indicating execution of the motion compensation pixel interpolation. In other words, in a case where motion compensation pixel interpolation is to be executed, 1 is decoded for the flag, and in a case where motion compensation pixel interpolation is not be to executed, 0 is decoded.

In step S402, the decoding unit 203 decodes the encoded data demultiplex in step S401 and obtains the block division information, the residual coefficient, the prediction information, and the quantization parameter.

In step S403, the inverse-quantization/inverse-transformation unit 204 performs inverse-quantization of the residual coefficient in units of sub-blocks and obtains the prediction error by further performing inverse-orthogonal-transforming.

In step S404, the image reconstruction unit 205 generates the prediction image on the basis of the prediction information obtained in step S402. Furthermore, the image reconstruction unit 205 reconstructs the image data from the generated prediction image and the prediction error generated in step S403 and stores the image data in the frame memory 206.

In step S405, the control unit 200 of the image decoding apparatus determines whether or not decoding of all of the blocks in the frame has ended. In a case where the control unit 200 determines that decoding of all of the blocks has ended, the processing proceeds to step S406. In a case where the control unit 200 determines that an non-decoded block still exists, the processing returns to step S402 in order to execute decoding processing on the block.

In step S406, the in-loop filter unit 207 executes in-loop filter processing on the image data reconstructed in step S404, generates a filter-processed image, and re-stores this in the frame memory 206.

In step S407, the resolution transformation unit 209 retrieves the filter image of the current picture and the reference picture referenced for inter prediction by the boundary block of the current picture from the frame memory 206. Also, the resolution transformation unit 209 uses the resolution transformation control information supplied from the demultiplexer decoding unit 202 to magnify or reduce the reference picture and generate the resolution transformation image. Next, the interpolation unit 210 uses simple replication pixel interpolation or motion compensation pixel interpolation to generate and interpolate a pixel group located outside the screen boundary of the filter image of the current picture adjacent to the boundary block of the filter image of the current picture. For each boundary block, in the case of using motion compensation pixel interpolation, the interpolation unit 210 generates the pixels outside the screen boundary using pixels located inside the screen boundary of the resolution transformation image. Then, the interpolation unit 210 stores the interpolation image obtained by generating and interpolating pixels outside the screen boundary in the frame memory 206, and the processing ends.

The configuration and operations described above can improve the generation accuracy of the prediction image in motion compensation pixel interpolation by magnifying or reducing a reference picture on the basis of resolution transformation control information. Also, using such a prediction image, a bitstream expressed in an amount of encoding less than a prediction error signal can be decoded.

Note that in the present embodiment, the pixels outside the screen boundary of the reference picture not generated using motion compensation pixel interpolation are generated using the pixels inside the screen boundary of the reference picture. However, no such limitation is intended. A pixel calculated via motion compensation pixel interpolation outside the screen boundary located at the farthest place from the screen boundary of the reference picture may be set as an end pixel, and the end pixel may be further replicated or the average value between the end pixel and the pixel inside the screen boundary used in simple replication pixel interpolation may be replicated. A detailed example will now be described using FIG. 11.

The thick frame illustrated in the right diagram in FIG. 11 is the reference picture 1101, and the thin frame 1102 represents a region outside the screen boundary of the reference picture 1101. The region 1103 is a boundary block that is in contact at the left side with the left side of the reference picture 1101 from the left side. The region 1104 is generated using pixels of the picture decoded before the reference picture via motion compensation pixel interpolation and is in contact at the right side with the left side of the reference picture 1101 from the outer side. Ten pixels having numbers 0 to 9 fill the inside of the region 1104. Of these, pixels 0 and 5 are end pixels. In this case, the pixel Y located on the outer side of the region 1104 may have the same value as the pixel V or may be the same value as the end pixel 0. Alternatively, the average value of the pixel V and the end pixel 0 may be used. Alternatively, the pixel Y may be calculated using either the average value, the median value, the maximum value, or the minimum value of a pixel group on a normal line of the left side of the boundary block where the pixel V exists, a pixel group on the normal line, or a pixel group including the pixel V included in the region 1103. Alternatively, the pixel Y may be calculated using either the average value, the median value, the maximum value, or the minimum value of the pixel group included in the region 1104, that is, the pixels 0 to 4. Alternatively, the pixel Y may be calculated using the average value, the median value, the maximum value, or the minimum value of a pixel group of the pixel group on the normal line including the region 1103 and the region 1104. Furthermore, the pixel Y may be calculated using either the average value, the median value, the maximum value, or the minimum value of values calculated using the pixel group of the region 1104 and the values calculated using the pixel group of the region 1103. Also, in a similar manner, a pixel Z may be calculated using the pixels on the normal line of the left side of the boundary block where a pixel W exists. As a result, an interpolation pixel can be generated with good accuracy by selecting the average value, the median value, the maximum value, or the minimum value depending on the characteristics of the pixel group used in calculating. In other words, in a case where the pixel value of the pixel group used in calculating varies, by using the average value, pixels with a high accuracy that are not affected by the variation can be generated. In the case of using the median value, pixels that are not affected by outliers can be generated. Also, in a case where, in the pixel group used in calculating, the value of a pixel inside the screen boundary or an end pixel used in simple replication pixel interpolation is a value significantly less than other values, the maximum value is used. In a case where the value of a pixel inside the screen boundary or an end pixel used in simple replication pixel interpolation is a value significantly greater than the other values, the minimum value is used. In this manner, the effects of localized noise can be avoided. Note that, even in a case where the upper side of the boundary block is in contact from the inner side with the upper side of the reference picture, where the right side of the boundary block is in contact from the inner side with the right side of the reference picture, and where the lower side of the boundary block is in contact from the inner side with the lower side of the reference picture, pixels located on the outer side of the pixel groups generated using motion compensation pixel interpolation may be generated as in a case where the left side of the boundary block described above is in contact from the inner side with the left side of the reference picture. In this manner, taking into account the value of the pixel group generated via motion compensation interpolation, a pixel located on the outer side of the pixel group generated using motion compensation pixel interpolation can be generated. This can reduce discontinuity between interpolated pixels outside the screen boundary and allows a bitstream expressed in an amount of encoding less than a prediction error signal of the sub-block to be encoded to be decoded.

Also, in the present embodiment, the pixels in the upper-left, upper-right, lower-left, and lower-right regions are generated using the pixels located in the four corners inside the screen boundary of the reference picture. However, no such limitation is intended. These may be calculated using the pixels on the outer side of the pixels in the four corners of the reference picture. A detailed example will now be described using FIG. 11. The rectangular regions of FIG. 11 are as described above and thus will not be described. However, the image for interpolation 1111 is an image for interpolation referenced via inter prediction by the boundary block 1105 located in the upper-left corner of the reference picture 1101, and the region 1115 is a prediction block corresponding to the boundary block 1105.

Pixels 10, 12, 20, and 24 are generated via motion compensation pixel interpolation for the pixel A in the upper-left corner of the reference picture 1101. In this case, pixels 11, 21, 22, and 23 of the reference picture 1101 may be generated from pixels 11, 21, 22, and 23 of the image for interpolation 1111. Accordingly, a pixel located at the upper-left of the reference picture can be generated more accurately than via simple replication of the pixel A. Alternatively, the pixel 11 may be generated using the average value of pixels 10 and 12. Alternatively, the pixel 11 may be generated using either the average value or the median value of the pixels 10, 12, and A. Also, the pixels 21 to 23 may be generated using the average value of pixels 20 and 24. Alternatively, the pixels 21 to 23 may be generated using either the average value or the median value of the pixels 20, 24, and A. By using the average value, a pixel reflecting the state of the signal in the left direction and the upper direction of the reference picture can be generated. In the case of using the median value, a pixel not affected by outliers can be generated.

The pixels 50, 52, 60, and 64 are generated via motion compensation pixel interpolation for the pixel K in the upper-right corner of the reference picture 1101. In this case, the pixels 51, 61, 62, and 63 of the reference picture 1101 may be generated from the pixels 51, 61, 62, and 63 of the image for interpolation 1111. Accordingly, a pixel located at the upper-right of the reference picture can be generated more accurately than via simple replication of the pixel K. Alternatively, the pixel 51 may be generated using the average value of pixels 50 and 52. Alternatively, the pixel 51 may be generated using either the average value or the median value of the pixels 50, 52, and K. Also, the pixels 61 to 63 may be generated using the average value of pixels 60 and 64. Alternatively, the pixels 61 to 63 may be generated using either the average value or the median value of the pixels 60, 64, and K. By using the average value, a pixel reflecting the state of the signal in the upper direction and the right direction of the reference picture can be generated. In the case of using the median value, a pixel not affected by outliers can be generated.

The pixels 30, 32, 40, and 44 are generated via motion compensation pixel interpolation for the pixel F in the lower-left corner of the reference picture 1101. In this case, the pixels 31, 41, 42, and 43 of the reference picture 1101 may be generated from the pixels 31, 41, 42, and 43 of the image for interpolation 1111. Accordingly, a pixel located at the upper-left of the reference picture can be generated more accurately than via simple replication of the pixel F. Alternatively, the pixel 31 may be generated using the average value of pixels 30 and 32. Alternatively, the pixel 31 may be generated using either the average value or the median value of the pixels 30, 32, and F. Also, the pixels 41 to 43 may be generated using the average value of pixels 40 and 44. Alternatively, the pixels 41 to 43 may be generated using either the average value or the median value of the pixels 40, 44, and F. By using the average value, a pixel reflecting the state of the signal in the left direction and the lower direction of the reference picture can be generated. In the case of using the median value, a pixel not affected by outliers can be generated.

The pixels 70, 72, 80, and 84 are generated via motion compensation pixel interpolation for the pixel P in the lower-right corner of the reference picture 1101. In this case, the pixels 71, 81, 82, and 83 of the reference picture 1101 may be generated from the pixels 71, 81, 82, and 83 of the image for interpolation 1111. Accordingly, a pixel located at the upper-left of the reference picture can be generated more accurately than via simple replication of the pixel P. Alternatively, the pixel 71 may be generated using the average value of pixels 70 and 72. Alternatively, the pixel 71 may be generated using either the average value or the median value of the pixels 70, 72, and P. Also, the pixels 81 to 83 may be generated using the average value of pixels 80 and 84. Alternatively, the pixels 81 to 83 may be generated using either the average value or the median value of the pixels 80, 84, and P. By using the average value, a pixel reflecting the state of the signal in the right direction and the lower direction of the reference picture can be generated. In the case of using the median value, a pixel not affected by outliers can be generated.

In this manner, taking into account the value of the pixel group generated via motion compensation interpolation, pixels located at the upper-left, upper-right, lower-left, and lower-right of the reference picture surrounding the pixel group generated using motion compensation pixel interpolation can be generated. This can reduce discontinuity between interpolated pixels outside the screen boundary and allows a bitstream expressed in an amount of encoding less than a prediction error signal of the sub-block to be encoded to be decoded.

Note that in the present embodiment described above, on the basis of motion information of each boundary block, pixels located outside the screen boundary of the reference picture are generated without referencing the motion information of other boundary blocks. However, the present embodiment is not limited thereto. Motion compensation pixel interpolation may be performed referencing the motion information of the boundary block located up/down or left/right of the boundary block to be processed. A detailed example will now be described using FIG. 12. The thick frame at the periphery of the reference picture 1211 is the screen boundary of the picture, and the thin frame 1210 represents a region outside the boundary of the reference picture 1211. Also, the left side of boundary blocks 1212, 1213, and 1214 are in contact from the inner side with the left side of the reference picture. The regions 1215, 1216, and 1217 corresponding to the boundary blocks 1212, 1213, and 1214 are generated using pixels located inside the screen boundary of a resolution-transformed image for interpolation 1221 obtained via resolution transformation of a picture decoded before the reference picture via motion compensation pixel interpolation. The right sides of these regions are in contact from the outer side with the left side of the reference picture. For each boundary block located inside the reference picture 1211, on the basis of the prediction information of each boundary block sequentially from the upper-left to the lower-right, a rectangular region of the resolution-transformed image for interpolation 1221 obtained using inter prediction located inside the screen boundary of the resolution-transformed image for interpolation 1221 is identified. In FIG. 12, the regions used in inter prediction corresponding to the boundary blocks 1212, 1213, and 1214 are represented by boundary blocks 1222, 1223, and 1224, and rectangular regions 1225, 1226, and 1227 adjacent to each block are used to generate regions 1215, 1216, and 1217, which are pixel groups outside the screen region of the reference picture. Furthermore, the motion vector for the boundary block 1212 and the boundary block 1214 are the same. In this case, the region 1223, which is a region used in inter prediction indicated by the motion information of the boundary block 1213, is not adjacent to the boundary block 1222 and the boundary block 1224. However, the motion vector of the boundary block 1212 and the boundary block 1214 are the same, and the relative positional relation between the boundary block 1212 and the boundary block 1214 is the same as the relative positional relation between the boundary block 1222 and the boundary block 1224. In a zoom scene with a set scaling window, since an object in the scene is magnified or reduce to the same size via resolution transformation, it can be thought that the motion vector produced by inter prediction reflects the global motion of the entire screen. Thus, in such a case, the pixels of the region 1216 may be generated using a region 1228 between the rectangular region 1225 and the rectangular region 1227 instead of the pixels of the region 1226. **In** this manner, for the left side of the reference picture, in the case of executing correction processing for motion compensation pixel interpolation of the boundary block to be processed using motion information of the adjacent boundary block, 1 may be decoded for a flag indicating execution of correction processing of the left side of the reference picture, and in the case of not executing correction processing, 0 may be decoded for a flag indicating no execution of correction processing.

Note that, even in a case where the upper side of the boundary block is in contact from the inner side with the upper side of the reference picture, where the right side of the boundary block is in contact from the inner side with the right side of the reference picture, and where the lower side of the boundary block is in contact from the inner side with the lower side of the reference picture, pixels located on the outer side of the pixel groups generated using motion compensation pixel interpolation may be generated as in a case where the left side of the boundary block described above is in contact from the inner side with the left side of the reference picture. 1 may be decoded for a flag indicating execution of correction processing of the right side of the reference picture, and in the case of not executing correction processing, 0 may be decoded for a flag indicating no execution of correction processing. Alternatively, 1 may be decoded for a flag indicating execution of correction processing of the upper side of the reference picture, and in the case of not executing correction processing, 0 may be decoded for a flag indicating no execution of correction processing. 1 may be decoded for a flag indicating execution of correction processing of the lower side of the reference picture, and in the case of not executing correction processing, 0 may be decoded for a flag indicating no execution of correction processing. In this manner, by controlling whether or not to execute correction processing for each side of the reference picture, execution of correction processing can be limited to only the sides to be improved for interpolation accuracy via correction processing. By executing processing in this manner, the interpolation accuracy of pixels interpolated outside the screen boundary is improved, and a bitstream expressed in an amount of encoding less than a prediction error signal of the sub-block to be encoded to be decoded can be decoded.

Note that in the present embodiment, on the basis of the motion information of each boundary block, for all of the boundary blocks in contact with the inner side in the screen boundary of the reference picture, the pixels located outside the screen boundary of the reference picture are generated using motion compensation pixel interpolation. However, no such limitation is intended. For each side surrounding the reference picture, the pixels outside the screen boundary may be collectively generated for the rectangular region between each rectangular region adjacent to the boundary blocks in the four corners. A detailed example will now be described using FIGS. 13A and 13B. The thick frame of the periphery of the reference picture 1311 of in FIGS. 13A and 13B is the screen boundary, and the thin frame 1310 represents a region outside the boundary of the reference picture 1311. Also, the left sides of boundary blocks 1312 and 1313 are in contact from the inner side with the left side of the reference picture; and regions 1314 and 1315 corresponding to each boundary block are generated using pixels located inside the screen boundary of a resolution-transformed image for interpolation 1321 obtained via resolution transformation of a picture decoded before the reference picture via motion compensation pixel interpolation. The right sides of these regions are in contact from the outer side with the left side of the reference picture. First, motion compensation pixel interpolation is executed for the boundary blocks located in the upper-left corner, the upper-right corner, the lower-left corner, and the lower-right corner. For each boundary block other than the boundary blocks located in the upper-left corner, the upper-right corner, the lower-left corner, and the lower-right corner, from among the boundary blocks located inside the reference picture 1311, on the basis of the prediction information of each boundary block sequentially from the upper-left to the lower-right, a rectangular region of the resolution-transformed image for interpolation 1321 obtained using inter prediction located inside the screen boundary of the resolution-transformed image for interpolation 1321 is identified. In FIGS. 13A and 13B, the regions used in inter prediction corresponding to the boundary blocks 1312 and 1313 are represented by prediction blocks 1322 and 1323, and rectangular regions 1324 and 1325 adjacent to each prediction block are used to generate regions 1314 and 1315, which are pixel groups outside the screen region of the reference picture. Furthermore, the motion vector for the boundary block 1312 and the region 1314 are the same.
In the case illustrated in FIG. 13A, the motion vector of the boundary block 1312 and the boundary block 1313 are the same, and the relative positional relation between the region 1314 and the region 1315 is the same as the relative positional relation between the region 1324 and the region 1325. In a zoom scene with a set scaling window, since an object in the scene is magnified or reduce to the same size via resolution transformation, it can be thought that the motion vector produced by inter prediction reflects the global motion of the entire screen.
Thus, in such a case, the region 1316 may be generated using the region 1326 between the region 1324 and the region 1325. In this manner, in a case where, for each boundary block between the boundary block 1312 and the boundary block 1313, instead of performing motion compensation pixel interpolation, collective interpolation processing is executed to interpolate the pixels located to the left of the screen boundary of the reference picture, 1 may be decoded for a flag indicating execution of the collective interpolation processing, and in the case of not executing collective interpolation processing, 0 may be decoded for a flag indicating no execution of collective interpolation processing.

In the case illustrated in FIG. 13B, the motion vector of the boundary block 1312 and the boundary block 1313 are the same, and the relative positional relation between the region 1314 and the region 1315 is the same as the relative positional relation between the region 1324 and the region 1325. In a zoom scene with a set scaling window, since an object in the scene is magnified or reduce to the same size via resolution transformation, it can be thought that the motion vector produced by inter prediction reflects the global motion of the entire screen. Thus, in such a case, the region 1316 may be generated using the region 1326 between the region 1324 and the region 1325. However, in the case of FIG. 13B, one or more of the pixel groups included in the region 1326 are pixels outside the screen boundary of the resolution-transformed image for interpolation 1321. Thus, in this case, only the pixels included in a region in which the region 1326 and the region of the resolution-transformed image for interpolation 1321 overlap may be replicated in the region 1316. Also, for the pixels of the region 1316 other than the replicated pixels, pixels may be interpolated using the single replication pixel interpolation described above. In this manner, in a case where, for each boundary block between the boundary block 1312 and the boundary block 1313, instead of performing motion compensation pixel interpolation, collective interpolation processing is executed to interpolate the pixels located to the left of the screen boundary of the reference picture, 1 may be decoded for a flag indicating execution of the collective interpolation processing, and in the case of not executing collective interpolation processing, 0 may be decoded for a flag indicating no execution of collective interpolation processing.

Note that, even in a case where the upper side of the boundary block is in contact from the inner side with the upper side of the reference picture, where the right side of the boundary block is in contact from the inner side with the right side of the reference picture, and where the lower side of the boundary block is in contact from the inner side with the lower side of the reference picture, pixels located on the outer side of the pixel groups generated using motion compensation pixel interpolation may be generated as in a case where the left side of the boundary block described above is in contact from the inner side with the left side of the reference picture. In this case, furthermore, 1 may be decoded for a flag indicating execution of correction processing of the right side of the reference picture, and in the case of not executing correction processing, 0 may be decoded for a flag indicating no execution of correction processing. Alternatively, 1 may be decoded for a flag indicating execution of correction processing of the upper side of the reference picture, and in the case of not executing correction processing, 0 may be decoded for a flag indicating no execution of correction processing. 1 may be decoded for a flag indicating execution of correction processing of the lower side of the reference picture, and in the case of not executing correction processing, 0 may be decoded for a flag indicating no execution of correction processing. In this manner, by controlling whether or not to execute correction processing for each side of the reference picture, execution of correction processing can be limited to only the sides to be improved for interpolation accuracy via correction processing.

By executing processing in this manner, on the basis of the processing result of the boundary blocks located in the four corners of the reference picture instead of all the boundary blocks, the execution of motion compensation pixel interpolation of the other boundary blocks can be controlled, and pixels outside the screen boundary of the reference picture can be generated with a smaller amount of processing compared to a case of executing collective pixel interpolation.

Furthermore, in the present embodiment, the image data is input frame by frame, and the bitstream generated by executing encoding processing is decoded. However, the target of the decoding processing is not limited to the bitstream obtained by encoding the image data. For example, a feature amount used in machine learning for object recognition or the like may be input in a two-dimensional form, and decoding processing may be executed to decode the generated bitstream. In this manner, a bitstream with efficiently encoded feature amount data used in machine learning can be decoded.

### Third Embodiment

In the first embodiment described above, the image encoding apparatus includes the hardware illustrated in FIG. 1. Also, in the second embodiment, the image decoding apparatus includes the hardware illustrated in FIG. 2. However, the processing executed by the processing units illustrated in FIGS. 1 and 2 may be implemented via a computer program. The third embodiment described below is an example of implementation using a computer program.

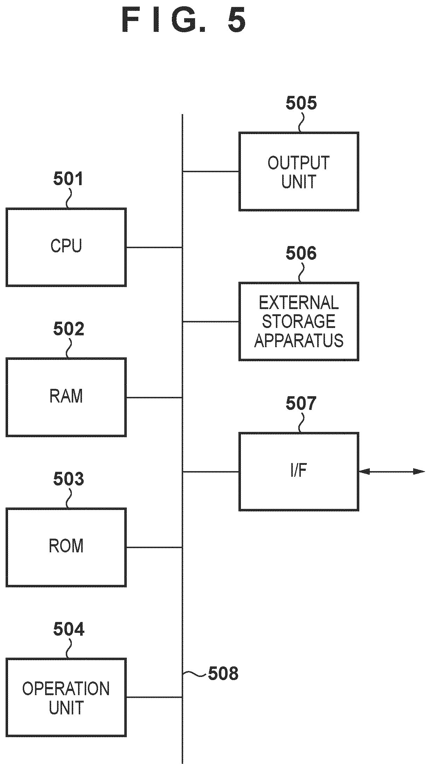

FIG. 5 is a block diagram illustrating an example of the hardware configuration of a computer that can be applied to the apparatus described above in the first and second embodiment.

A CPU 501 controls the entire computer using computer programs and data stored in a RAM 502 and a ROM 503 and executes each process described above as the image processing apparatus according to the embodiments described above. In other words, the CPU 501 functions as the processing units illustrated in FIGS. 1 and 2.

The RAM 502 includes an area for temporarily storing computer programs and data loaded from an external storage apparatus 506, data obtained from an external unit via an I/F (interface) 507, and the like. Also, the RAM 502 includes a working area used when the CPU 501 executes the various types of processing. In other words, the RAM 502 can allocate function as a frame memory, appropriately provide other types of areas, and the like.

The ROM 503 stores settings data for the present computer, a boot program, and the like. An operation unit 504 includes a keyboard, a mouse, and the like and can input various types of instruction to the CPU 501 when operated by the user of the present computer. A display unit 505 displays the processing result from the CPU 501. Also, the display unit 505 includes a liquid crystal display, for example.

The external storage apparatus 506 is a large-capacity information storage apparatus represented by a hard disk drive apparatus. The external storage apparatus 506 stores an OS (operating system) and a computer program for causing the CPU 501 to implement the functions of the units illustrated in FIGS. 1 and 2. Also, the external storage apparatus 506 may store the image data to be processed.

The computer programs and data stored in the external storage apparatus 506 are loaded onto the RAM 502 as appropriate according to the control by the CPU 501 and become the processing target of the CPU 501. At the I/F 507, networks such as LAN and the Internet and other devices such as a projection apparatus or a display apparatus can be connected, and the present computer can obtain and deliver various kinds of information via the I/F 507. 508 denotes a bus connecting the units described above.

The operations performed through the configuration described above are controlled and executed centered on the CPU 501 performing the operations describe using the flowchart described above.

According to the present invention, a storage medium storing the code of a computer program for implementing the functions described above is supplied to a system, and the system may read out and execute the code of the computer program. In this case, the code of the computer program read out from the storage medium implements the functions of the embodiments described above, and the storage medium storing the code of the computer program forms a part of the present invention. This also includes a case where, on the basis of an instruction in the code of the program, an operating system (OS) or the like running on a computer executes a portion or all of the actual processing, and the functions described above are implemented via the processing.

The following modes may also be implemented. This includes an example in which a computer program code read out from a storage medium is written to a memory in a function expansion card inserted into a computer or a function expansion unit connected to a computer. Then, on the basis of an instruction in the computer program code, the CPU or the like in the function expansion card or function expansion unit executes a portion or all of the actual processing to implement the functions described above.

In a case where the present invention is applied to the storage medium described above, this storage medium stores a computer program code corresponding to the flowchart described above.

The present invention may be used in an encoding apparatus/decoding apparatus that encodes and decodes still images and video. In particular, the present invention can be applied to an encoding method and decoding method for generating pixels outside the screen boundary of a reference picture in inter prediction.

### Other Examples

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

The present application claims priority from Japanese Patent Application No. 2022-165024 filed on October 13, 2022, which is hereby incorporated by reference herein.

## Claims

1. An image encoding apparatus **characterized by** comprising:
predicting means for generating a prediction image for a target block in a first frame to be encoded by referencing a second frame encoded before the first frame;
encoding means for encoding a prediction error of the target block for the prediction image;
interpolating means for, in a case where pixels outside of a boundary of the second frame are referenced, interpolating the pixels outside of the boundary of the second frame using pixels of a third frame encoded before the second frame;
and
transforming means for changing a resolution of a frame before the first frame.

2. The image encoding apparatus according to claim 1, **characterized in that** the frame before the first frame is the second frame or the third frame.

3. The image encoding apparatus according to claim 1, **characterized in that** the frame before the first frame includes the second frame and the third frame.

4. An image encoding method **characterized by** comprising:
generating a prediction image for a target block in a first frame to be encoded by referencing a second frame encoded before the first frame;
encoding a prediction error of the target block for the prediction image;
in a case where pixels outside of a boundary of the second frame are referenced, interpolating the pixels outside of the boundary of the second frame using pixels of a third frame encoded before the second frame; and
changing a resolution of a frame before the first frame.

5. A program read and executed by a computer for causing the computer to execute the method according to claim 4.

6. An image decoding apparatus **characterized by** comprising:
decoding means for obtaining prediction error data of a target block in a first frame by decoding encoded data;
generating means for generating a prediction image by referencing a second frame decoded before the first frame;
reconstructing means for reconstructing an image of the target block from the prediction error data and the prediction image;
interpolating means for, in a case where pixels outside of a boundary of the second frame are referenced, interpolating the pixels outside of the boundary of the second frame using pixels of a third frame decoded before the second frame;
and
transforming means for changing a resolution of a frame before the first frame.

7. The image decoding apparatus according to claim 6, **characterized in that** the frame before the first frame is the second frame or the third frame.

8. The image decoding apparatus according to claim 6, **characterized in that** the frame before the first frame includes the second frame and the third frame.

9. An image decoding method **characterized by** comprising:
obtaining prediction error data of a target block in a first frame by decoding encoded data;
generating a prediction image by referencing a second frame decoded before the first frame;
reconstructing an image of the target block from the prediction error data and the prediction image;
in a case where pixels outside of a boundary of the second frame are referenced, interpolating the pixels outside of the boundary of the second frame using pixels of a third frame decoded before the second frame; and
changing a resolution of a frame before the first frame.

10. A program read and executed by a computer for causing the computer to execute the method according to claim 9.
